# EUROPÄISCHE PATENTSCHRIFT

(11) **EP 4 238 687 B1**
(45) Veröffentlichungstag und Bekanntmachung des Hinweises auf die Patenterteilung: **18.02.2026**
(21) Anmeldenummer: 23159246.0
(22) Anmeldetag: 28.02.2023
(51) Int. Cl.: B23K 26/12, B23K 26/14, B23K 26/38

(54) **VERFAHREN ZUR BEARBEITUNG EINES PLATTEN- ODER ROHRFÖRMIGEN WERKSTÜCKS**
METHOD FOR MACHINING A PLATE-SHAPED OR TUBULAR WORKPIECE
PROCÉDÉ D'USINAGE D'UNE PIÈCE À USINER EN FORME DE PLAQUE OU DE TUBE

(30) Priorität: 01.03.2022 DE 102022104791
(43) Veröffentlichungstag der Anmeldung: 06.09.2023
(73) Patentinhaber: TRUMPF Werkzeugmaschinen SE + Co. KG, 71254 Ditzingen (DE); WSoptics technologies GmbH, 87675 Rettenbach am Auerberg (DE)
(72) Erfinder: Mach, Patrick, 71404 Korb (DE); Mock, Daniel, 71394 Kernen (DE); Sepp, Florian, 86975 Bernbeuren (DE); Weiß, Christoph, 86956 Schongau (DE)
(74) Vertreter: Trumpf Patentabteilung

(56) Entgegenhaltungen:
- WO-A1-2022/037797
- JP-A- 2002 210 577

## Beschreibung

Die Erfindung liegt auf dem technischen Gebiet der Fertigung metallischer Werkstückteile und betrifft ein Verfahren zur Bearbeitung eines platten- oder rohrförmigen Werkstücks mit einem Bearbeitungsstrahl, bei dem eine trennende Bearbeitung des Werkstücks zur Erzeugung eines Schnittspalts und eine nicht-trennende und zugleich nicht-fügende Modifikation des Werkstücks zur Erzeugung einer Verrundungszone, Fasenzone oder Senkungszone erfolgt (siehe beispielsweise WO 2022/037797, welches die Grundlage für den Oberbegriff des Anspruchs 1 bildet).

Im Handel verfügbare Laserschneidvorrichtungen ermöglichen eine automatisierte Fertigung von Werkstückteilen in großer Stückzahl und mit hoher Präzision. Hierbei werden Werkstückteile mit einem Laserstrahl aus einem metallischen Werkstück entlang von Schnittlinien, die den Konturen der Werkstückteile entsprechen, ausgeschnitten. Zusätzlich können durch Bewegen des Laserstrahls entlang kreisförmiger Schnittlinien Löcher, d.h. Ausschnitte mit kleinem Durchmesser, mit hoher Geschwindigkeit in die auszuschneidenden Werkstückteile eingebracht werden.

Abhängig von der Verwendung der ausgeschnittenen Werkstückteile können die Werkstückteile eine aufwändige mechanische Nachbearbeitung benötigen. So kann es gewünscht sein, scharfe Schnittkanten zu runden oder mit einer Fase oder Senkung zu versehen. Löcher, in denen bei der späteren Verwendung eines Werkstückteils Senckopfschrauben angeordnet werden sollen, werden üblicherweise spanend mit einer Bohrmaschine nachbearbeitet, um Fasen bzw. Senkungen zur Aufnahme der Köpfe der Senkkopfschrauben zu formen.

Grundsätzlich ist die nachgelagerte mechanische Bearbeitung zeitlich und meist auch personell sehr aufwändig, zumal sie oft manuell erfolgt. Zudem ist eine solche Nachbearbeitung kostenintensiv, so dass sich die Herstellung von Werkstückteilen in unerwünschter Weise verlängert und verteuert. Dies betrifft insbesondere die spanende Nachbearbeitung von Löchern zum Erzeugen von Fasen bzw. Senkungen, welche sehr zeitaufwändig ist.

Demgegenüber besteht die Aufgabe der vorliegenden Erfindung darin, herkömmliche Verfahren, bei denen ein platten- oder rohrförmigen Werkstück mittels eines Bearbeitungsstrahls bearbeitet wird, so weiterzubilden, dass die Herstellung von Werkstückteilen mit verrundeten Schnittkanten, Fasen oder Senkungen an Schnittkanten, in automatisierter Weise schneller, kostengünstiger und mit hoher Qualität erfolgen kann.

Diese Aufgabe wird gelöst durch ein Verfahren zur Bearbeitung eines platten- oder rohrförmigen Werkstücks mittels eines Bearbeitungsstrahls, der einen Laserstrahl und ein Prozessgas zum Austrieb von geschmolzenem Werkstückmaterial umfasst.

Im Sinne vorliegender Erfindung bezeichnet der Begriff "Werkstück" ein platten- oder rohrförmiges, typischerweise metallisches Bauteil, aus dem mindestens ein Werkstückteil (Gutteil) herzustellen ist. Das plattenförmige Werkstück ist typischer Weise eben bzw. flach. Vorzugsweise enthält das Werkstück Stahl, insbesondere Baustahl oder Edelstahl, oder Aluminium, oder besteht hieraus. Beispielsweise enthält das Werkstück unlegierten Baustahl, oder besteht hieraus. Vorzugsweise ist dies unlegierter Baustahl S235, S275, S355, S460, S185, S295, E355, E360, besonders bevorzugt S235, wie er im Handel verfügbar ist (z.B. ESB European Steel Business Group). Besonders bevorzugt ist der Werkstoff für das Werkstück Chrom-Nickel-Stahl. Vorzugsweise hat das Werkstück eine Materialdicke von 3 mm bis 60 mm.

Der Bearbeitungsstrahl wird von einem Strahlkopf geführt und tritt an einer endständigen Schneiddüse aus. Der Laserstrahl ist wie üblich in Form eines fokussierten, rotationssymmetrischen Strahlkegels mit einer zentrischen Strahlachse (Symmetrieachse) ausgebildet. Der Strahldurchmesser kennzeichnet die Querausdehnung des Strahls oder die physische Größe des Strahls senkrecht zur Ausbreitungsrichtung. Beim Fokussieren wird der Laserstrahl durch eine Fokussierlinse oder einen Fokussierspiegel gebündelt. Der Fokus des Laserstrahls ist durch jene Stelle definiert, an der der Laserstrahl seinen geringsten Querschnitt bzw. den geringsten Strahldurchmesser hat. Die Brennweite gibt die Entfernung der Linsenhauptebene (oder Spiegelhauptebene) zum Brennpunkt eines idealen, fokussierten Parallelstrahls an. Je kleiner die Brennweite, desto stärker wird der Laserstrahl fokussiert und desto kleiner ist der Fokusdurchmesser, und umgekehrt.

Der Strahlkopf dient auch zur Führung des Prozessgases, das typischerweise, jedoch nicht zwingend, aus derselben Schneiddüse abgegeben wird und vorzugsweise koaxial zum Laserstrahl geführt ist. Das Prozessgas ist typischerweise, jedoch nicht zwingend, in Form eines auf das Werkstück treffenden Gaskegels ausgebildet.

Das Werkstück liegt mit einer Werkstückunterseite einer Werkstückauflage auf. An der Werkstückoberseite weist das Werkstück eine (oberseitige) Werkstückoberfläche auf. Bei einem plattenförmigen Werkstück ist die Werkstückoberfläche plan. Wenn nicht anders verwendet, wird hier und im Weiteren als "Werkstückoberfläche" die oberseitige Werkstückoberfläche verstanden, auf welche der Bearbeitungsstrahl trifft. Die gegenüberliegende Werkstückoberfläche, an der das Werkstück üblicherweise einer Unterlage aufliegt, ist die Werkstückunterseite.

Der Schneidkopf zur Führung des Laserstrahls und Prozessgases kann relativ zum Werkstück in einer typischerweise horizontalen Ebene parallel zur Ebene der Werkstückoberfläche, sowie in einer hierzu senkrechten, typischerweise vertikalen Richtung bewegt werden.

In der vorliegenden Erfindungsbeschreibung ist das Bezugssystem immer stationär zum Werkstück, so dass der Schneidkopf als bewegt und das Werkstück als stationär angesehen werden. Lokal betrachtet ist es jedoch unerheblich, ob der Schneidkopf oder das Werkstück oder beide bewegt werden. Insofern wäre es gleichermaßen möglich, dass alternativ zum bewegten Schneidkopf auch das Werkstück bewegt wird oder sowohl der Schneidkopf als auch das Werkstück bewegt werden.

Die Energie des Laserstrahls hängt von der konkreten Auslegung einer Laserquelle ab und wird typischerweise in Joule (J) angegeben. Die Leistung des Laserstrahls (d.h. Energie pro Zeit), typischerweise in Joule pro Sekunde (J/s) bzw. in Watt (W) gemessen, beschreibt die optische Ausgangsleistung eines Dauerstrichlasers (CW) bzw. die mittlere Leistung eines Pulslasers. Pulslaser werden auch über ihre Pulsenergie charakterisiert, die direkt proportional zur mittleren Leistung und umgekehrt proportional zur Wiederholungsrate des Lasers ist. Als "Energiedichte" wird die auf die bestrahlte Fläche des Werkstücks bezogene Energie des Bearbeitungsstrahls bezeichnet. Die Energiedichte bemisst sich beispielsweise in J/mm².

Wichtig für die Bearbeitung des Werkstücks ist, neben der Energiedichte, die Verfahrgeschwindigkeit des Schneidkopfs bzw. Laserstrahls, d.h. die Zeit, wie lange eine bestimmte Fläche des Werkstücks durch den Laserstrahl bestrahlt wird. Üblich ist es, hierfür den Begriff "Streckenenergie" zu verwenden. Dies ist die vom Werkstück absorbierte Leistung des Laserstrahls pro Geschwindigkeit des Schneidkopfs bzw. Bearbeitungsstrahls, z.B. bemessen in Watt/(mm/s). Wird die Leistung des Laserstrahls Watt (W) als Joule pro Sekunde (J/s) angegeben, so bemisst sich die Streckenenergie demzufolge in J/mm.

Bei der Bearbeitung kommt es also wesentlich auf die Streckenenergie des Bearbeitungsstrahls an, wobei die vom Werkstück absorbierte Energie von der Energiedichte abhängt. Die vom Werkstück absorbierte Energie hängt, bei einer bestimmten Leistung des Laserstrahls, von der Größe des Strahlflecks auf dem Werkstück ab, entsprechend dem Strahldurchmesser an der Stelle, an der der Laserstrahl auf die Werkstückoberfläche trifft. Der Strahldurchmesser des Laserstrahls auf der Werkstückoberfläche ergibt sich durch die Fokuslage, d.h. die Position des Fokus des Laserstrahls relativ zum Werkstück (senkrechter kürzester Abstand), insbesondere relativ zur Werkstückoberfläche, auf welche der Laserstrahl gerichtet ist, oder auch relativ zur Werkstückauflage. Wenn sich das Werkstück im divergenten Bereich des Strahlkegels befindet (Fokus oberhalb der Werkstückoberfläche, auf welche der Bearbeitungsstrahl trifft), kann durch eine Vergrößerung des Abstands zwischen Fokus und Werkstück der Strahldurchmesser auf dem Werkstück vergrößert werden, und umgekehrt. Somit kann durch eine Änderung des Strahldurchmessers auf dem Werkstück durch Ändern der Fokuslage die Energiedichte des Laserstrahls und somit die vom Werkstück absorbierte Energie, welche in die Streckenenergie eingeht, gezielt verändert werden. Je größer der Strahldurchmesser, desto kleiner ist die vom Werkstück absorbierte Energie, und umgekehrt. Bei einem Laser ist die Stahlintensität außerhalb des Fokus, bezogen auf den Querschnitt, nicht konstant. Idealerweise ist die Leistungsintensität ein Gauß-Profil. Auf jeden Fall ist die Energiedichte zum Rand hin relativ gering, insbesondere außerhalb des Fokus.

Die Streckenenergie hängt auch von der Geschwindigkeit des Laserstrahls, d.h. der Verfahrgeschwindigkeit des Schneidkopfs bzw. Schneiddüse, auch als "Vorschubgeschwindigkeit" bezeichnet, ab. Je größer die Vorschubgeschwindigkeit, desto kürzer wird eine bestimmte Fläche des Werkstücks bestrahlt, und umgekehrt. Somit wird mit einer Vergrößerung der Vorschubgeschwindigkeit die Streckenenergie des Laserstrahls verringert, und umgekehrt. Es versteht sich, dass die Energiedichte und damit auch die Streckenenergie durch eine Änderung der Leistung des Laserstrahls selbst verändert werden kann. Die in das Werkstück eingebrachte Energie kann auch durch eine Änderung von Art und/oder Zusammensetzung des bei der Bearbeitung eingesetzten Prozessgases geändert werden.

Erfindungsgemäß wird das platten- oder rohrförmige Werkstück durch den auf die Werkstückoberfläche gerichteten Bearbeitungsstrahl (d.h. Laserstrahl und Prozessgas) in einem zwei Schritte umfassenden Verfahren bearbeitet. In einem ersten Bearbeitungsschritt wird das Werkstück mit einem entlang einer Schnittlinie geführten ersten Bearbeitungsstrahl bearbeitet, wodurch am Werkstück ein die Dicke des Werkstücks durchgreifender Schnittspalt erzeugt wird, der sich in seiner Länge entlang der Schnittlinie erstreckt und in seiner Breite durch zwei Schnittkanten im Werkstück begrenzt wird. In einem zweiten Bearbeitungsschritt wird das Werkstück mit einem zweiten Bearbeitungsstrahl bearbeitet, der entlang einer Nachbearbeitungslinie oder -zone geführt wird, die parallel versetzt zu einer der beiden Schnittkanten verläuft, wodurch am Werkstück im Bereich dieser Schnittkante eine Verrundungszone, Fasenzone oder Senkungszone erzeugt wird. Zur einfachen Bezugnahme und Unterscheidung wird der im ersten Bearbeitungsschritt eingesetzte Bearbeitungsstrahl als "erster Bearbeitungsstrahl" und der im zweiten Bearbeitungsschritt eingesetzte Bearbeitungsstrahl als "zweiter" Bearbeitungsstrahl" bezeichnet. Der Laserstrahl wirkt mit dem auf die Schnittfuge gerichteten Prozessgas zusammen.

Das erfindungsgemäße Verfahren umfasst somit zwei Verfahrensschritte. Im ersten Bearbeitungsschritt wird der erste Bearbeitungsstrahl im trennenden Modus eingesetzt, im zweiten Bearbeitungsschritt wird der zweite Bearbeitungsstrahl im nicht-trennenden Modus eingesetzt. Im schneidenden Modus ist die Streckenenergie des Laserstrahls auf dem Werkstück bzw. die in das Werkstück eingebrachte Energie so groß, dass der Bearbeitungsstrahl das Werkstück schneidend (trennend) bearbeitet, so dass das Werkstück penetriert wird, um einen Schnittspalt zu erzeugen. Im nicht-schneidenden Modus ist die Streckenenergie des Laserstrahls auf dem Werkstück bzw. die in das Werkstück eingebrachte Energie so gering, dass das Werkstück nicht-schneidend (nicht-trennend) bearbeitet wird, so dass das Werkstück nicht penetriert wird, wodurch eine Verrundungszone, Fasenzone oder Senkungszone erzeugt wird.

Vorzugsweise sind der erste Bearbeitungsstrahl im ersten Bearbeitungsschritt und der zweite Bearbeitungsstrahl im zweiten Bearbeitungsschritt stets senkrecht zur Werkstückoberfläche ausgerichtet.

Das bei der Laserbearbeitung eingesetzte Prozessgas dient zum Austreiben des geschmolzenen Werkstückmaterials bzw. Schmelze durch den Schnittspalt. Auch bei der Erzeugung einer Verrundungs-, Fasen- oder Senkungszone ist es notwendig, nicht nur mit dem Laserstrahl, sondern auch mit dem Prozessgas auf das Werkstück einzuwirken, um die entstehende Schmelze bzw. Schlacke abzuführen.

In dem erfindungsgemäßen Verfahren bildet der erste Bearbeitungsstrahl auf der Werkstückoberfläche einen kleineren Strahldurchmesser als der zweite Bearbeitungsstrahl. Hierdurch kann der Bearbeitungsstrahl in einfacher und schneller Weise im trennenden Modus zur Erzeugung des Schnittspalts oder im nicht-trennenden Modus zum Erzeugen einer Fase oder Verrundung eingesetzt werden.

Erfindungsgemäß beträgt der Strahldurchmesser des ersten Bearbeitungsstrahls auf der weniger als 50% des Strahldurchmessers des zweiten Bearbeitungsstrahls auf der Werkstückoberfläche. In derzeit gängigen Laserschneidmaschinen beträgt der Strahldurchmesser auf dem Werkstück bei der trennenden Bearbeitung typischer Weise 1/10 bis 5/10 mm. Zum Erzeugen einer Verrundungs-, Fasen- oder Senkungszone durch einen Bearbeitungsstrahl beträgt der Strahldurchmesser auf dem Werkstück vorzugsweise mindestens 1,5 mm und liegt beispielsweise im Bereich von 3 bis 25 mm.

Gemäß einer Ausgestaltung des erfindungsgemäßen Verfahrens wird der Bearbeitungsstrahl vor dem Auftreffen auf die Werkstückoberfläche durch eine Schneiddüse geführt wird, wobei die Schneiddüse beim ersten Bearbeitungsschritt einen kleineren Abstand zur Werkstückoberfläche als beim zweiten Bearbeitungsschritt hat. Vorzugsweise wird der Strahldurchmesser auf dem Werkstück durch Ändern des senkrechten Abstands der Schneiddüse von der Werkstückoberfläche geändert. Besonders vorteilhaft wird der Strahldurchmesser auf dem Werkstück ausschließlich durch Ändern des senkrechten Abstands der Schneiddüse von der Werkstückoberfläche geändert. Erfindungsgemäß beträgt der Abstand der Schneiddüse beim ersten Bearbeitungsschritt zur Werkstückoberfläche maximal 5 mm und beim zweiten Bearbeitungsschritt mindestens 15 mm, insbesondere mindestens 30 mm. Vorteilhaft liegt im zweiten Bearbeitungsschritt der Fokus des Laserstrahls auf oder oberhalb der Werkstückoberfläche. Vorzugsweise erfolgt eine Änderung der Fokuslage des Laserstrahls relativ zum Werkstück durch Ändern der Höhe des Schneidkopfs bzw. Schneiddüse über dem Werkstück, d.h. der Schneidkopf wird mit einer zur Werkstückoberfläche senkrechten Bewegungskomponente typischer Weise in vertikaler Richtung verfahren.

Gemäß einer vorteilhaften Ausgestaltung des erfindungsgemäßen Verfahrens wird der Bearbeitungsstrahl vor dem Auftreffen auf die Werkstückoberfläche durch eine Schneiddüse geführt, wobei ein Fokus des Laserstrahls des zweiten Bearbeitungsstrahls innerhalb der Schneiddüse liegt, insbesondere im Bereich von 3 bis 5 mm oberhalb einer Düsenöffnung, an der der Laserstrahl austritt. Wenn das Prozessgas des ersten Bearbeitungsstrahls als wesentlichen Bestandteil Sauerstoff enthält, ist es von Vorteil, wenn ein Fokus des Laserstrahls des ersten Bearbeitungsstrahls innerhalb der Schneiddüse liegt, insbesondere im Bereich von 1 bis 6 mm oberhalb der Düsenöffnung. Wenn das Prozessgas des ersten Bearbeitungsstrahls als wesentlichen Bestandteil Stickstoff enthält, ist es von Vorteil, wenn ein Fokus des Laserstrahls des ersten Bearbeitungsstrahls außerhalb der Schneiddüse liegt, insbesondere im Bereich von 0 bis 10 mm unterhalb der Düsenöffnung. Durch diese Maßnahmen können der Schnittspalt und die Verrundungs-, Fasen- oder Senkungszone effizient und mit hoher Genauigkeit hergestellt werden.

Gemäß einer vorteilhaften Ausgestaltung des erfindungsgemäßen Verfahrens wird der Bearbeitungsstrahl vor dem Auftreffen auf die Werkstückoberfläche durch eine Schneiddüse geführt wird, wobei ein Fokus des Laserstrahls des zweiten Bearbeitungsstrahls im Bereich von 30 bis 40 mm oberhalb der Werkstückoberfläche liegt. Wenn das Prozessgas des ersten Bearbeitungsstrahls als wesentlichen Bestandteil Sauerstoff enthält, ist es von Vorteil, wenn ein Fokus des Laserstrahls des ersten Bearbeitungsstrahls im Bereich von 2 bis 7 mm oberhalb der Werkstückoberfläche liegt. Wenn das Prozessgas des ersten Bearbeitungsstrahls als wesentlichen Bestandteil Stickstoff enthält, ist es von Vorteil, wenn ein Fokus des Laserstrahls des ersten Bearbeitungsstrahls auf der Werkstückoberfläche oder im Werkstück liegt, insbesondere 0 bis 8 mm unterhalb der Werkstückoberfläche. Durch diese Maßnahmen können der Schnittspalt und die Verrundungs-, Fasen- oder Senkungszone effizient und mit hoher Genauigkeit hergestellt werden.

Gemäß einer vorteilhaften Ausgestaltung des erfindungsgemäßen Verfahrens umfasst der erste Bearbeitungsstrahl ein anderes Prozessgas als der zweite Bearbeitungsstrahl. Im Sinne vorliegender Erfindung liegt insbesondere dann ein anderes Prozessgas vor, wenn sich das Prozessgas im ersten Bearbeitungsstrahl und das Prozessgas im zweiten Bearbeitungsstrahl in der Art und/oder Zusammensetzung der eingesetzten Gase und/oder im Gasdruck unterscheiden. Durch diese Maßnahme können eine Reihe wichtiger Vorteile erreicht werden, hierunter insbesondere die Verwendung des Bearbeitungsstrahl im schneidenden oder nicht-schneidenden Modus zur Bearbeitung des Werkstücks.

Bei einer vorteilhaften Ausgestaltung des erfindungsgemäßen Verfahrens umfasst das Prozessgas des ersten Bearbeitungsstrahls als wesentlichen Bestandteil (Hauptbestandteil) Stickstoff (N₂) oder Sauerstoff (O₂) oder ein Mischgas aus Stickstoff (N₂) und Sauerstoff (O₂), wobei in dem letztgenannten Fall, das Mischgas selbst den Hauptbestandteil des Prozessgases ausmacht. Das Prozessgas des zweiten Bearbeitungsstrahls umfasst als wesentlichen Bestandteil (Hauptbestandteil) Sauerstoff (O₂) oder Stickstoff (N₂) oder ein Mischgas aus Stickstoff (N₂) und Sauerstoff (O₂), wobei in dem letztgenannten Fall, das Mischgas selbst den Hauptbestandteil des Prozessgases ausmacht. Vorzugsweise umfasst das Prozessgas des ersten Bearbeitungsstrahls als wesentlichen Bestandteil Sauerstoff oder Stickstoff. Vorzugsweise umfasst das Prozessgas des zweiten Bearbeitungsstrahls als wesentlichen Bestandteil Sauerstoff oder Stickstoff. Beispielsweise umfasst das Prozessgas des ersten Bearbeitungsstrahls als wesentlichen Bestandteil Stickstoff und das Prozessgas des zweiten Bearbeitungsstrahls als wesentlichen Bestandteil Sauerstoff.

Im Sinne vorliegender Erfindung wird als "wesentlicher Bestandteil" ein Anteil des jeweiligen Gases im Prozessgas von mehr als 50%, insbesondere mehr als 75%, oder sogar mehr als 90% verstanden. Das Prozessgas kann insbesondere vollständig aus dem jeweiligen Gas, das den Hauptbestandteil darstellt, bestehen. Dies gilt in analoger Weise, wenn der Hauptbestandteil ein Mischgas aus Sauerstoff und Stickstoff ist.

Besonders vorteilhaft wird zum Bearbeiten eines Werkstücks aus Baustahl im zweiten Bearbeitungsstrahl Sauerstoff als wesentlicher Bestandteil des Prozessgases eingesetzt. Hierdurch kann die gebildete Schmelze vorteilhaft im Schnittspalt vollständig oxidiert und kann daher leicht vom Werkstück entfernt werden. Das Prozessgas im ersten Bearbeitungsstrahl kann als wesentlichen Bestandteil Sauerstoff oder Stickstoff oder ein Mischgas aus Sauerstoff und Stickstoff aufweisen. Vorzugsweise weist das Prozessgas im ersten Bearbeitungsstrahl als wesentlichen Bestandteil Sauerstoff oder Stickstoff auf.

Beim Bearbeiten eines Werkstücks aus Edelstahl oder Aluminium wird im zweiten Bearbeitungsstrahl vorteilhaft Stickstoff als wesentlicher Bestandteil des Prozessgases eingesetzt. Stickstoff ist ein Inertgas und kostengünstig verfügbar. Das Prozessgas im ersten Bearbeitungsstrahl kann als wesentlichen Bestandteil Sauerstoff oder Stickstoff oder ein Mischgas aus Sauerstoff und Stickstoff aufweisen. Vorzugsweise weist das Prozessgas im ersten Bearbeitungsstrahl als wesentlichen Bestandteil Stickstoff auf.

Erfindungsgemäß wird der Gasdruck des Prozessgases im zweiten Bearbeitungsstrahl gegenüber dem Gasdruck des Prozessgases im ersten Bearbeitungsstrahl, insbesondere in Abhängigkeit der Materialdicke des Werkstücks und/oder einer Dimensionierung der Verrundungs-, Fasen- oder Senkungszone, verändert. Erfindungsgemäß wird das Prozessgas des zweiten Bearbeitungsstrahls mit einem geringeren Gasdruck beaufschlagt als das Prozessgas des ersten Bearbeitungsstrahls. Durch diese Maßnahme wird in vorteilhafter Weise eine weniger konzentrierte, "weichere" Einwirkung des Prozessgases auf die Werkstückoberfläche erreicht, so dass zu starke Materialspritzer auf der Werkstückoberfläche vermieden werden können. Bevorzugt beträgt der Gasdruck des Prozessgases im zweiten Bearbeitungsstrahls weniger als 7 bar, wodurch einerseits ein gutes Abführen der Schmelze erreicht wird, andererseits Materialspritzer zuverlässig und sicher vermieden werden können. Der genannte Gasdruck (Kesseldruck) gilt innerhalb des Schneidkopfs vor dem Austritt des Prozessgases aus der Schneiddüse.

Erfindungsgemäß wird dann, wenn das Prozessgas des zweiten Bearbeitungsstrahls als wesentlichen Bestandteil Sauerstoff enthält, das Prozessgas mit einem Gasdruck im Bereich von 2 bar bis 4 bar beaufschlagt. Dieser Gasdruck ist besonders vorteilhaft in Kombination mit einer Schneiddüse, die einen Düsendurchmesser von 0,8 mm - 1,4 mm aufweist. Erfindungsgemäß wird dann, wenn das Prozessgas des zweiten Bearbeitungsstrahls als wesentlichen Bestandteil Stickstoff enthält, das Prozessgas mit einem Gasdruck im Bereich von 0,3 bar bis 1 bar beaufschlagt. Dieser Gasdruck ist besonders vorteilhaft in Kombination mit einer Schneiddüse, die einen Düsendurchmesser von mindestens 2,7 mm, insbesondere genau 2,7 mm, aufweist.

In dem erfindungsgemäßen Verfahren wird der Bearbeitungsstrahl im trennenden oder nicht-trennenden Modus eingesetzt. Vorteilhaft ist es, wenn die Laserleistung des Laserstrahls im zweiten Bearbeitungsstrahl gegenüber einer Laserleistung des Laserstrahls im ersten Bearbeitungsstrahl, insbesondere in Abhängigkeit einer Materialdicke des Werkstücks und/oder einer Dimensionierung der Verrundungs-, Fasen- oder Senkungszone, verändert wird. Je größer die Dimensionierung der Verrundungs-, Fasen- oder Senkungszone ist, desto größer ist typischerweise die Laserleistung. Je größer die Materialdicke des Werkstücks ist, desto größer ist typischerweise die Laserleistung.

Vorzugsweise ist eine Laserleistung des Laserstrahls im zweiten Bearbeitungsstrahl geringer als im ersten Bearbeitungsstrahl, wobei es besonders bevorzugt ist, wenn die Laserleistung des Laserstrahls im zweiten Bearbeitungsstrahl maximal 4 kW, insbesondere weniger als 4kW, beispielsweise weniger als 3,5 kW, beträgt. Vorteilhaft liegt die Laserleistung des Laserstrahls im ersten Bearbeitungsstrahl im Bereich von 1 kW bis 40 kW und im zweiten Bearbeitungsstrahl im Bereich von 0,5 kW bis 4 kW. Hierdurch kann die Streckenenergie des Laserstrahls für die Verwendung des Bearbeitungsstrahls im schneidenden oder nicht-schneidenden Modus gezielt eingestellt werden. Beispielsweise beträgt im zweiten Bearbeitungsschritt die (mittlere) Laserleistung weniger als 3,5 kW und/oder der Fokusdurchmesser des Laserstrahls mindestens 150 µm und/oder die Vorschubgeschwindigkeit mindestens 1 m/min. Je näher der Fokus des Laserstrahls am Werkstück liegt, desto größer sollte im zweiten Bearbeitungsschritt der Fokusdurchmesser gewählt werden. Vorzugsweise beträgt der Fokusdurchmesser bei einer Fokuslage auf der Werkstückoberfläche mehr als 250 µm.

Beispielsweise liegt die Laserleistung des Laserstrahls im ersten Bearbeitungsstrahls mit einem Prozessgas, das Sauerstoff oder Stickstoff als wesentliche Komponente enthält, im Bereich von 1 kW bis 40 kW. Beispielsweise beträgt die Laserleistung bei Baustahl als Material für das Werkstück mit einer Blechdicke bis 12 mm und Sauerstoff als Prozessgas maximal 4 kW, bei Blechdicken von mehr als 12 mm maximal 10 kW. Bei der Verwendung von Stickstoff als Prozessgas kann die anlagentechnisch maximal mögliche Laserleistung eingesetzt werden.

Bei einer vorteilhaften Ausgestaltung des erfindungsgemäßen Verfahrens wird der Bearbeitungsstrahl vor dem Auftreffen auf die Werkstückoberfläche durch eine Schneiddüse mit einem Düsendurchmesser geführt wird, wobei für den ersten und den zweiten Bearbeitungsstrahl derselbe Düsendurchmesser, vorzugsweise dieselbe Schneiddüse verwendet wird. Durch diese Maßnahme kann eine besonders einfache Verfahrensführung erreicht werden. Zudem können die Kosten für die Implementierung des erfindungsgemäßen Verfahrens vermindert werden.

Gemäß einer vorteilhaften Ausgestaltung des erfindungsgemäßen Verfahrens wird zur Erzeugung des Schnittspalts der erste Bearbeitungsstrahl nur einmal entlang der Schnittlinie geführt und zur Erzeugung der Verrundungs-, Fasen- oder Senkungszone wird der zweite Bearbeitungsstrahl mehrmals entlang der Nachbearbeitungslinie oder
- zone geführt. Dies ermöglicht einerseits eine effiziente Erzeugung des Schnittspalts und andererseits eine zuverlässige Ausbildung von Verrundungs-, Fasen- oder Senkungszone. Vorzugsweise ist die Laserleistung des Laserstrahls im zweiten Bearbeitungsstrahl beim letzten Führen entlang der Nachbearbeitungslinie oder -zone geringer als bei mindestens einem vorherigen Führen entlang der Nachbearbeitungslinie oder
- zone, und ist insbesondere um die halbe Laserleitung verringert. Grundsätzlich gilt, je mehr Überfahrten des Schneidkopfes bzw. Schneiddüse eingesetzt werden, desto weniger Laserleistung ist erforderlich.

Die Streckenenergie des Laserstrahls auf dem Werkstück bzw. die in das Werkstück eingebrachte Energie kann geändert werden durch eine Änderung der Energie bzw. Leistung des Laserstrahls und/oder eine Änderung der Vorschubgeschwindigkeit des Schneidkopfs und/oder ein Fokussieren/Defokussieren des Laserstrahls, d.h. durch eine Änderung des Strahldurchmessers auf der Werkstückoberfläche, insbesondere durch Ändern der Fokuslage relativ zum Werkstück und/oder durch eine Änderung des bei der Bearbeitung eingesetzten Prozessgases.

Vorzugsweise erfolgt eine Änderung der Streckenenergie des Laserstrahls auf dem Werkstück durch Ändern der Fokuslage relativ zum Werkstück, was bevorzugt durch Ändern der Höhe des Schneidkopfs über der dem Schneidkopf zugewandten Werkstückoberfläche bewirkt wird, d.h. der Schneidkopf wird mit einer zur Werkstückoberfläche senkrechten Bewegungskomponente typischer Weise in vertikaler Richtung verfahren.

Gemäß einer Ausgestaltung des erfindungsgemäßen Verfahrens bildet der erste Bearbeitungsstrahl auf der Werkstückoberfläche einen kleineren Strahldurchmesser als der zweite Bearbeitungsstrahl. Vorteilhaft hat die Schneiddüse beim ersten Bearbeitungsschritt einen kleineren Abstand zur Werkstückoberfläche als beim zweiten Bearbeitungsschritt. Erfindungsgemäß beträgt der Strahldurchmesser des ersten Bearbeitungsstrahls weniger als 50% des Strahldurchmessers des zweiten Bearbeitungsstrahls auf der Werkstückoberfläche. In derzeit gängigen Laserschneidmaschinen beträgt der Strahldurchmesser auf dem Werkstück bei der trennenden Bearbeitung typischer Weise 1/10 bis 5/10 mm. Zum Erzeugen einer Verrundungs-, Fasen- oder Senkungszone durch den Bearbeitungsstrahl beträgt der Strahldurchmesser auf dem Werkstück vorzugsweise mindestens 1,5 mm und liegt beispielsweise im Bereich von 3 bis 25 mm.

Vorzugsweise wird der Strahldurchmesser auf dem Werkstück durch Ändern des senkrechten Abstands der Schneiddüse von der Werkstückoberfläche geändert. Besonders vorteilhaft wird der Strahldurchmesser auf dem Werkstück ausschließlich durch Ändern des senkrechten Abstands der Schneiddüse von der Werkstückoberfläche geändert. Erfindungsgemäß beträgt der Abstand der Schneiddüse beim ersten Bearbeitungsschritt zur Werkstückoberfläche maximal 5 mm und beim zweiten Bearbeitungsschritt mindestens 15 mm, insbesondere mindestens 30 mm. Vorteilhaft liegt im zweiten Bearbeitungsschritt der Fokus des Laserstrahls auf oder oberhalb der Werkstückoberfläche. Vorzugsweise erfolgt eine Änderung der Fokuslage des Laserstrahls relativ zum Werkstück durch Ändern der Höhe des Schneidkopfs bzw. Schneiddüse über dem Werkstück, d.h. der Schneidkopf wird mit einer zur Werkstückoberfläche senkrechten Bewegungskomponente typischer Weise in vertikaler Richtung verfahren.

Gemäß einer vorteilhaften Ausgestaltung des erfindungsgemäßen Verfahrens ist der Energieeintrag in das Werkstück pro Fläche und Zeit beim ersten Bearbeitungsschritt größer als beim zweiten Bearbeitungsschritt.

Gemäß einer vorteilhaften Ausgestaltung des erfindungsgemäßen Verfahrens wird mittels des ersten Bearbeitungsschritts aus dem Werkstück ein Werkstückteil (Gutteil) ausgeschnitten, unter Ausbildung des Werkstückteils und eines Restgitters, wobei die Außenkontur des Werkstückteils durch die Schnittline festgelegt ist. Die eine der beiden Schnittkanten ist eine werkstückteilseitige Schnittkante und die andere der beiden Schnittkanten ist eine restgitterseitige Schnittkante. Die werkstückteilseitige Schnittkante wird mittels des zweiten Bearbeitungsschritts bearbeitet. Durch diese Maßnahme kann ein Werkstückteil (Gutteil) in besonders einfacher und effizienter Weise durch den Bearbeitungsstrahl mit einer Verrundungs-, Fasen- oder Senkungszone versehen werden.

Besonders vorteilhaft ist es, wenn zur Ausbildung des Schnittspalts der erste Bearbeitungsstrahl beim Führen entlang der Werkstückoberfläche zumindest einmal, insbesondere mehrmals abgeschaltet und dann wieder angeschaltet wird, wodurch die Schnittline mehrere Schnittlinienabschnitte ausbildet, so dass jeweils zwischen zwei benachbarten Schnittlinienabschnitten ein Steg angeordnet ist, durch den das Werkstückteil und das Restgitter miteinander verbunden bleiben. Das mit dem Restwerkstück verbundene Werkstückteil ist noch fester Bestandteil des Werkstücks, wobei die Verbindung im Sinne vorliegender Erfindung hinreichend starr ist, so dass in vorteilhafter Weise eine Lageänderung des teilweise ausgeschnittenen Werkstückteils relativ zum übrigen Werkstück bei der Erzeugung der Verrundungs-, Fasen- oder Senkungszone nicht auftritt bzw. eine hierbei etwaig auftretende Lageänderung vernachlässigbar klein ist und zu keiner vernünftiger Weise zu berücksichtigenden Änderung des Ergebnisses führt. Für die Erzeugung einer Verrundungs-, Fasen- oder Senkungszone an einem Werkstückteil ist es von Vorteil, wenn das Werkstückteil mit dem Restwerkstück verbunden ist, sich also beiderseits des Schnittspalts noch Werkstückmaterial befindet. Auf diese Weise ist zum einen das Werkstückteil in seiner Lage fixiert und kann nicht rutschen oder kippen, so dass der Laserstrahl beim Erzeugen der Verrundungs-, Fasen- oder Senkungszone exakt zur Schnittkante positioniert werden kann. Außerdem fließt die Schmelze, welche beim Erzeugen der Verrundungs-, Fasen- oder Senkungszone entsteht, in den Schnittspalt und kann daraus - insbesondere bei Verwendung von Sauerstoff als Prozessgas - einfacher entfernt werden als von der Oberseite des Werkstücks.

Demnach wird bei dieser Ausgestaltung die Erzeugung einer Verrundungs-, Fasen- oder Senkungszone nur durchgeführt, solange das Werkstückteil mit dem Restwerkstück über einen oder mehrere Stege, insbesondere Microjoints oder Nanojoints, verbunden ist. Im Sinne vorliegender Erfindung wird als "Steg" eine sich entlang der Schnittlinie erstreckende Verbindung aus Werkstückmaterial zwischen Werkstückteil und Restwerkstück verstanden, wobei der Steg den Schnittspalt unterbricht. Ein "Microjoint" ist ein Steg mit einer relativ geringen Abmessung entlang der Schnittlinie, welche erfindungsgemäß bevorzugt im Bereich von 1/10 mm bis 2 mm, besonders bevorzugt im Bereich von 1/10 mm bis 1 mm liegt. In der gängigen Verwendung des Begriffs, weist ein Microjoint eine Höhe auf, welche der Höhe bzw. Dicke des Werkstücks (d.h. Abmessung senkrecht zur Werkstückoberfläche) entspricht. Ein "Nanojoint" ist ein Microjoint, dessen Höhe in Bezug auf die Dicke des Werkstücks reduziert ist, wobei die Höhe eines Nanojoints erfindungsgemäß bevorzugt maximal die Hälfte der Dicke des Werkstücks beträgt. Microjoints und Nanojoints sind dem Fachmann aus der Praxis der Fertigung von Blech-Werkstückteilen durch Laserbearbeitung und aus der Patentliteratur wohlbekannt, so dass hier nicht näher darauf eingegangen werden muss. Lediglich ergänzend wird bezüglich Nanojoints beispielsweise auf die internationale Patentanmeldung WO 2019025327 A2 verwiesen.

Um das Werkstückteil vom Restwerkstück entfernen zu können, muss ein geschlossener Schnittspalt ausgebildet werden. Gemäß dieser Ausgestaltung der Erfindung ist die Ausbildung eines geschlossenen Schnittspalts erst nach Erzeugen der Verrundungs-, Fasen- oder Senkungszone an der werkstückteilseitigen Schnittkante vorgesehen. Die Erzeugung eines geschlossenen Schnittspalts kann mittels Bearbeitungsstrahl im trennenden Modus erfolgen, wobei der eine oder die mehreren Stege, insbesondere ein oder mehrere Microjoints oder Nanojoints, mit denen das Werkstückteil noch mit dem Restwerkstück verbunden ist, durchtrennt werden. Das Werkstückteil wird hierbei vom Restwerkstück freigeschnitten. Gemäß einer Ausgestaltung umfasst das erfindungsgemäße Verfahren einen Schritt, bei dem das Werkstückteil vom Restwerkstück mittels Bearbeitungsstrahl im trennenden Modus freigeschnitten wird.

Das Werkstückteil kann auch ohne Bearbeitungsstrahl vom Restwerkstück getrennt werden, wobei der eine oder die mehreren Stege, mit denen das Werkstücksteil noch mit dem Restwerkstück verbunden ist, mechanisch durchtrennt werden. Dies kann beispielsweise durch eine spanende Bearbeitung oder schneidende Bearbeitung (nicht Bearbeitungsstrahl) oder einfach durch Herausbrechen des Werkstückteils vom Restwerkstück erfolgen. Dem Fachmann sind fachübliche Maßnahmen insbesondere zum Durchtrennen von Microjoints oder Nanojoints wohlbekannt, so dass hier nicht näher darauf eingegangen werden muss. Erfindungsgemäß ist somit insbesondere auch der Fall umfasst, dass ein einziger Abschnitt des Schnittspalts mittels Bearbeitungsstrahl erzeugt wird, wobei das Werkstückteil noch durch einen einzigen Steg, insbesondere Micro- oder Nanojoint, mit dem Restwerkstück verbunden ist, wobei dieser Steg nicht durch den Bearbeitungsstrahl, sondern in anderer Weise mechanisch durchtrennt wird. Gemäß einer Ausgestaltung umfasst das erfindungsgemäße Verfahren einen Schritt, bei dem das Werkstückteil vom Restwerkstück nicht durch den Bearbeitungsstrahl, sondern durch ein mechanisches Durchtrennen von einem oder mehreren Stegen, insbesondere durch eine spanende Bearbeitung oder schneidende Bearbeitung (nicht Bearbeitungsstrahl) oder durch Herausbrechen des Werkstückteils vom Restwerkstück, vom Restwerkstück vollständig abgetrennt wird.

Gemäß einer vorteilhaften Ausgestaltung des erfindungsgemäßen Verfahrens wird mittels des ersten Bearbeitungsschritts aus dem Werkstück eine lochförmige Ausnehmung aus dem Werkstück ausgeschnitten, unter Ausbildung eines Abfallstücks und eines Werkstückteils, wobei die Außenkontur des Abfallstücks und die Innenkontur der lochförmigen Ausnehmung im Werkstückteil durch die Schnittline vorgegeben ist. Die eine der beiden Schnittkanten ist eine werkstückteilseitige Schnittkante und die andere der beiden Schnittkanten ist eine abfallstückseitige Schnittkante. Die werkstückteilseitige Schnittkante wird mittels des zweiten Bearbeitungsschritts bearbeitet. Demnach wird die Erzeugung einer Verrundungs-, Fasen- oder Senkungszone an der werkstückteilseitigen Schnittkante des Werkstückteils (d.h. verbleibendes Werkstück nach Entfernen des Abfallteils) durchgeführt, wenn das Abfallteil vom Werkstück ausgeschnitten wurde (d.h. Abfallteil hat keine Verbindung aus Werkstückmaterial zum verbleibenden Werkstück). Durch diese Maßnahme kann ein Werkstückteil (Gutteil) in besonders einfacher und effizienter Weise durch den Bearbeitungsstrahl mit einer Verrundungs-, Fasen- oder Senkungszone versehen werden, nachdem ein Abfallteil zur Erzeugung des Werkstückteils vom Werkstück freigeschnitten wurde.

Zum Ausschneiden des Abfallteils wird der Bearbeitungsstrahl im schneidenden Modus entlang einer kreisförmig-geschlossenen Schnittlinie geführt, wodurch ein kreisförmig-geschlossener Schnittspalt erzeugt wird. Hierbei wird das Abfallteil (Butzen) aus dem Werkstück ausgeschnitten. Möglich ist jedoch auch, den Butzen durch den Bearbeitungsstrahl zu zerteilen. Durch Entfernen des Butzens vom Werkstück wird ein im Querschnitt kreisrundes Loch (Durchbrechung) im Werkstück erzeugt. In aller Regel fällt der Butzen schon durch sein Eigengewicht nach unten weg, wodurch das Loch im Werkstück erzeugt wird. Das Loch wird vorzugsweise innerhalb der Kontur eines aus dem Werkstück auszuschneidenden Werkstückteils erzeugt. Besonders vorteilhaft weist die lochförmige Ausnehmung einen Durchmesser auf, der gleich groß wie oder kleiner als eine Werkstückdicke des Werkstücks ist. Wie Versuche der Erfindung gezeigt haben, können durch das erfindungsgemäße Verfahren besonders kleine Löcher mit Fasen bzw. Senkungen erzeugt werden, ohne dass die Gefahr besteht, dass durch das Erzeugen einer Fase bzw. Senkung ein benachbartes Loch beschädigt wird. Dies wäre bei der Anwendung eines Schrägschnitts zur Erzeugung einer Fase bzw. Senkung möglich.

Der Schnittspalt wird entlang der Kontur des Werkstückteils bzw. Abfallteils erzeugt, d.h. der Schnittspalt ist stets konturbildend für das Werkstückteil bzw. Abfallteil. Dementsprechend fallen unter den Begriff "Schnittspalt" im Sinne vorliegender Erfindung keine Abschnitte des Schnittspalts, welche nicht konturbildend sind und sich nicht entlang der Kontur des Werkstückteils bzw. Abfallteils erstrecken. Beispielsweise wird häufig entfernt von der Kontur in das Werkstück eingestochen und der Bearbeitungsstrahl erst ein Stück weit hin zur konturbildenden Schnittlinie verfahren.

In dem erfindungsgemäßen Verfahren wird zur Erzeugung einer Verrundungs-, Fasen- oder Senkungszone am Werkstück im Bereich der Schnittkante das Werkstück mit dem zweiten Bearbeitungsstrahl bearbeitet, der entlang einer Nachbearbeitungslinie oder -zone geführt wird, die parallel versetzt zu einer der beiden Schnittkanten verläuft. Gemäß einer Ausgestaltung wird der Bearbeitungsstrahl stets geradlinig entlang einer der beiden Schnittkanten oder parallel dazu versetzt geführt. Die ermöglicht eine besonders schnelle Erzeugung von Verrundungs-, Fasen- oder Senkungszone. Gemäß einer weiteren Ausgestaltung kann der Bearbeitungsstrahl auch quer zur einer der beiden Schnittkanten bewegt werden (Sekundärbewegung), solange die Primärbewegung entlang einer der beiden Schnittkanten oder parallel dazu versetzt geführt ist. Die Sekundärbewegung ist der Primärbewegung überlagert. In diesem Fall weist die Bewegung des Bearbeitungsstrahls, neben Bewegungskomponenten entlang einer der beiden Schnittkanten oder parallel dazu versetzt, auch Bewegungskomponenten quer (d.h. senkrecht) zu einer der beiden Schnittkanten auf, so dass ein größerer Bereich des Werkstücks vom Bearbeitungsstrahl überstrichen wird. Beispielsweise vollführt der Bearbeitungsstrahl eine mäanderförmige Hin- und Her-Bewegung entlang einer der beiden Schnittkanten oder parallel dazu versetzt. Der Bearbeitungsstrahl wird dabei bei seiner Bewegung entlang einer der beiden Schnittkanten oder parallel dazu versetzt mehrfach seitlich weggeführt und jeweils wieder hingeführt.

Vorteilhaft ist die Strahlachse des Laserstrahls sowohl im ersten Bearbeitungsschritt als auch im zweiten Bearbeitungsschritt stets senkrecht zur ebenen Werkstückauflage gerichtet, d.h. der Winkel zwischen Strahlachse und Werkstückauflage beträgt 90°. Dies bringt steuerungstechnische Vorteile mit sich. Zudem können Kosten für die technische Umsetzung einer entsprechenden Verschwenkbarkeit des Bearbeitungsstrahls relativ zur Ebene der Werkstückauflage eingespart werden. Denkbar ist jedoch auch, dass die Strahlachse beim Bestrahlen des Werkstücks verändert wird, wobei die Strahlachse zumindest zeitweilig einen von 90° verschiedenen Winkel zur Werkstückauflage einnimmt. Die Ausrichtung des Laserstrahls kann durch eine Verschwenkbarkeit des Schneidkopfs (mechanisch) und/oder eine Verschwenkbarkeit des Laserstrahls (optisch) erreicht werden. Beispielsweise kann durch ein Verschwenken des Laserstrahls während der Erzeugung der Verrundungs-, Fasen- oder Senkungszone ein größerer Bereich des Werkstücks überstrichen werden, was vorteilhaft sein kann.

Es versteht sich, dass die vorstehend genannten Ausgestaltungen der Erfindung in Alleinstellung oder in beliebiger Kombination einsetzbar sind, ohne den Rahmen der vorliegenden Erfindung zu verlassen.

### Kurze Beschreibung der Zeichnungen

Die Erfindung wird nun anhand von Ausführungsbeispielen näher erläutert, wobei Bezug auf die beigefügten Figuren genommen wird. Es zeigen:
- Fig. 1: eine schematische Darstellung einer beispielhaften Laserbearbeitungsvorrichtung zur Ausführung des erfindungsgemäßen Verfahrens;
- Fig. 2-16: beispielhafte Verfahren zur Bearbeitung eines Werkstücks;
- Fig. 17-18: beispielhafte Verfahren zur Bearbeitung eines Werkstücks;
- Fig. 19-22: Beispiele einer nicht-geradlinigen Bewegung des Laserstrahls entlang der Nachbearbeitungslinie;
- Fig. 23-27: verschiedene Ausgestaltungen zur Veranschaulichung der Erzeugung einer Verrundungs-, Fasen- oder Senkungszone;
- Fig. 28A-28C: eine Ausgestaltung des erfindungsgemäßen Verfahrens, bei dem Löcher mit Senkungen bzw. Fasen erzeugt werden;
- Fig. 29A-29D: eine weitere Ausgestaltung des erfindungsgemäßen Verfahrens, bei dem Löcher mit Senkungen bzw. Fasen erzeugt werden;
- Fig. 30A-30B: eine schematische Darstellung des Schneidkopfs in verschiedenen Stellungen zur trennenden oder nicht-trennenden Bearbeitung des Werkstücks;
- Fig. 31: ein Flussdiagramm des erfindungsgemäßen Verfahrens.

### Ausführliche Beschreibung der Zeichnungen

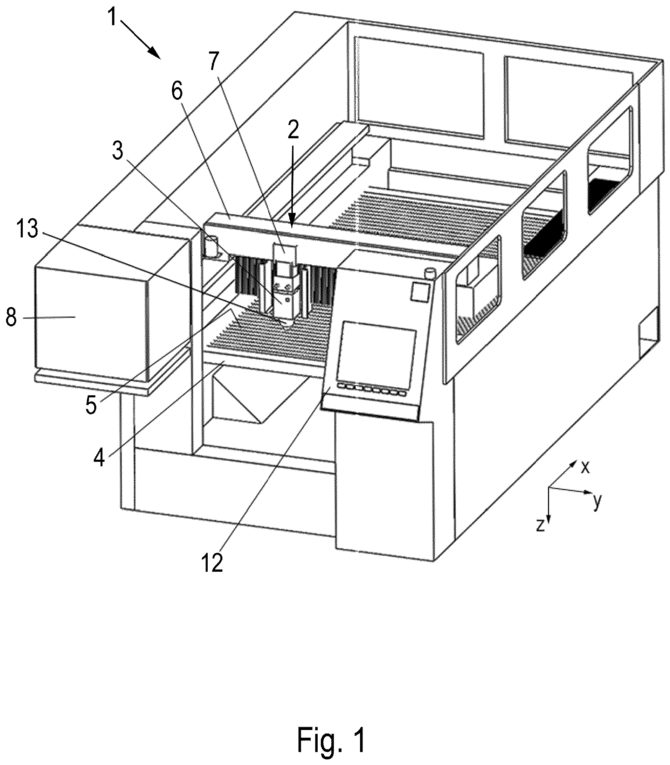

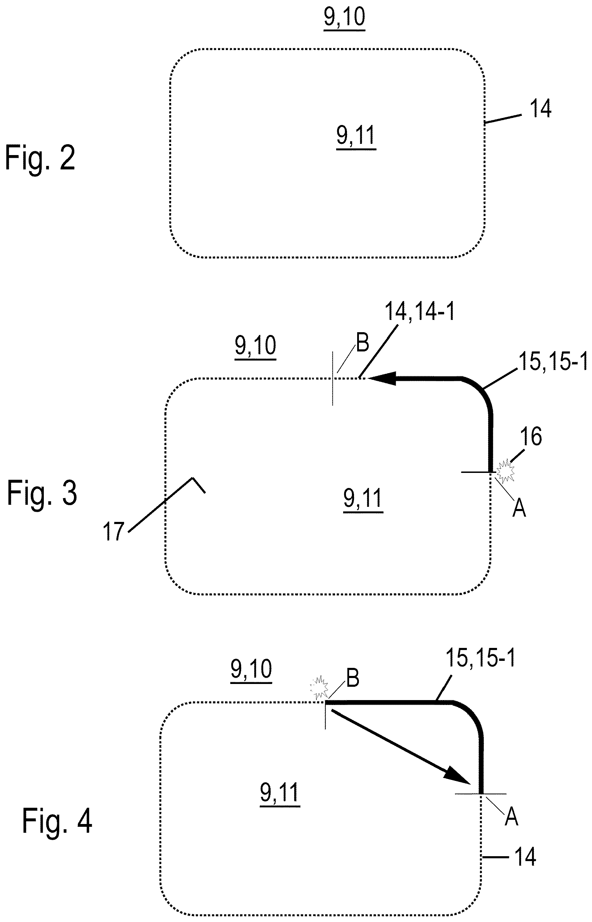

Sei zunächst Figur 1 betrachtet, worin eine an sich bekannte Laserbearbeitungsvorrichtung zum Laserschneiden von plattenartigen Werkstücken veranschaulicht ist. Die insgesamt mit der Bezugszahl 1 bezeichnete Laserbearbeitungsvorrichtung umfasst eine Laserschneideinrichtung 2 mit einem Schneidkopf 3, sowie einen Arbeitstisch 4 mit einer ebenen Werkstückauflage 5 für ein Werkstück 9 (nicht gezeigt in Figur 1, siehe z.B. Figuren 2 bis 16), beispielsweise eine ebene Blechtafel.

Die Werkstückauflage 5 wird von einem Querträger 6 überspannt, der entlang einer ersten Achsrichtung (x-Richtung) verfahrbar geführt ist. Am Querträger 6 ist ein Führungsschlitten 7 für den Schneidkopf 3 montiert, der am Querträger 6 entlang einer zur ersten Achsrichtung senkrechten zweiten Achsrichtung (y-Richtung) verfahrbar geführt ist. Der Schneidkopf 3 kann somit in einer durch die beiden Achsrichtungen (x-, y-Richtung) aufgespannten Ebene parallel und relativ zur beispielsweise horizontalen Werkstückauflage 5 verfahren werden. Der Schneidkopf 3 ist weiterhin in einer dritten Achsrichtung (z-Richtung), welche zur ersten und zweiten Achsrichtung senkrecht ist, höhenverfahrbar ausgebildet, wodurch der Abstand senkrecht zur Werkstückauflage 5 bzw. Werkstück 9 verändert werden kann. Bei einer horizontalen Werkstückauflage 5 entspricht die z-Richtung der Schwerkraftrichtung.

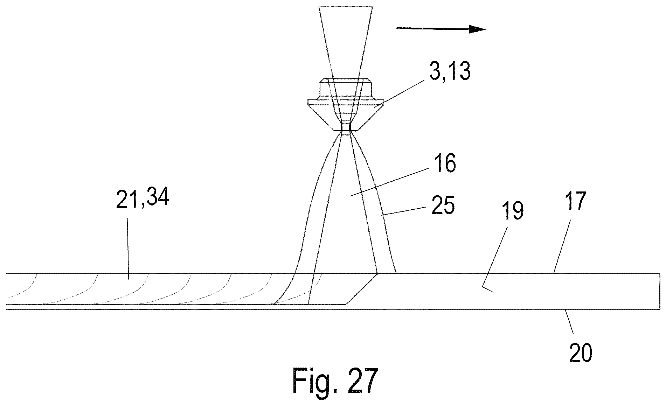

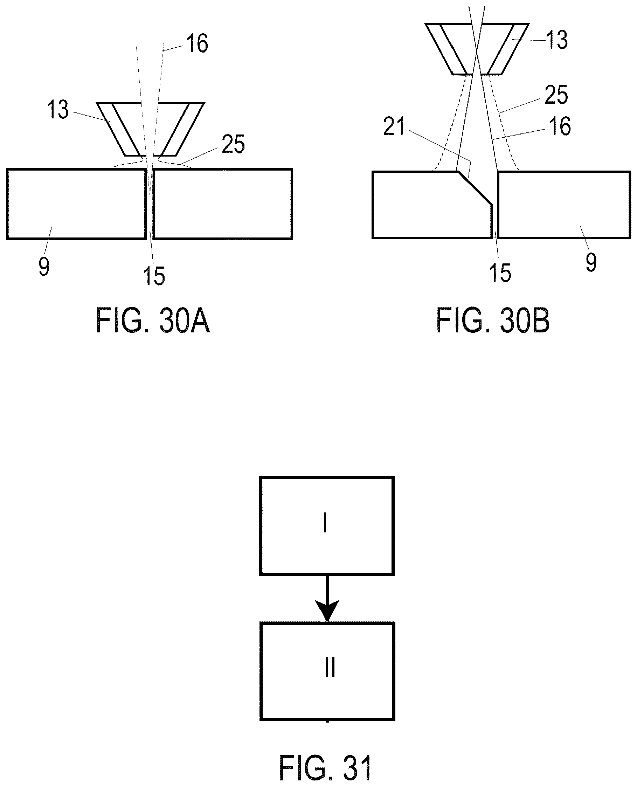

Der Schneidkopf 3 weist auf seiner der Werkstückauflage 5 zugewandten Seite eine sich zur Werkstückauflage 5 hin kegelförmig verjüngende Schneiddüse 13 auf. Der Schneidkopf 3 und die Schneiddüse 13 dienen zum gemeinsamen Führen eines Laserstrahls 16 (siehe z.B. Figuren 2 bis 16, 30A, 30B) und eines Prozessgases 25 (siehe Figuren 27, 30A, 30B).

Der Bearbeitungsstrahl 26 zur Bearbeitung des Werkstücks 9 umfasst den Laserstrahl 16 und das Prozessgas 25 (siehe Figuren 27, 30A, 30B). Das Prozessgas 25 wird in Form eines Gaskegels von der Schneiddüse 13 abgegeben und ist koaxial zum Laserstrahl 16 geführt. Es versteht sich, dass beim Führen des Laserstrahls 16 das Prozessgas 25 (d.h. Prozessgasstrahl in Form eines Gaskegels) mitgeführt wird

Der Laserstrahl 16 wird von einer Laserstrahlquelle 8 erzeugt und beispielsweise durch ein Strahlführungsrohr und mehrere Umlenkspiegel oder ein Lichtleitkabel zum Schneidkopf 3 geführt. Über eine Fokussierlinse oder adaptive Optik kann der Laserstrahl 16 in gebündelter Form (d.h. fokussiert) auf das Werkstück 9 gerichtet werden. Aufgrund der Verfahrbarkeit des Schneidkopfs 3 entlang der ersten Achsrichtung (x-Richtung) und zweiten Achsrichtung (y-Richtung) kann mit dem Laserstrahl 16 jeder beliebige Punkt am Werkstück 9 angefahren werden.

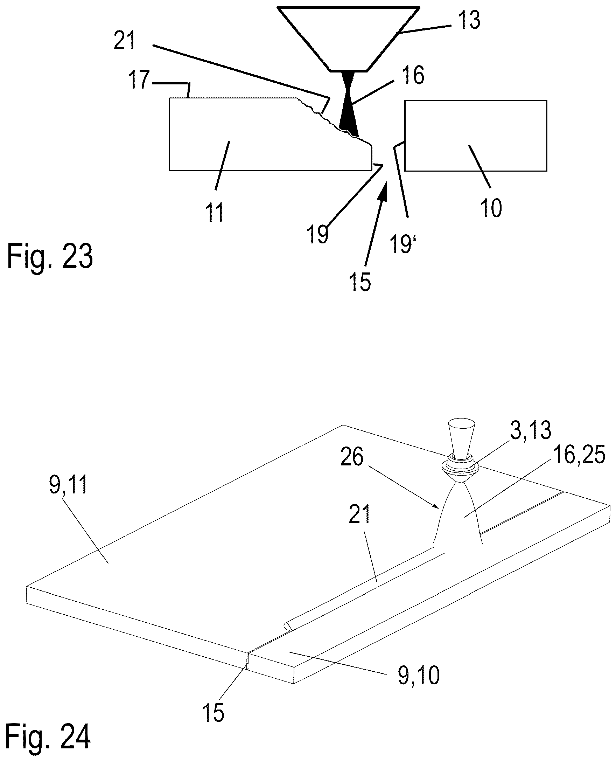

Das Werkstück 9 weist zwei einander gegenüberliegende Werkstückoberflächen 17, 20 auf (siehe z.B. Figur 23), wobei eine erste bzw. obere Werkstückoberfläche 17 der Schneiddüse 13 zugewandt und eine zweite bzw. untere Werkstückoberfläche 20 von der Schneiddüse 13 abgewandt ist. Durch die Höhenverfahrbarkeit des Schneidkopfs 3 in z-Richtung kann über eine Änderung des Abstands zur oberen Werkstückoberfläche 17 der Abstand der Schneiddüse 13 zum Werkstück 9 eingestellt werden. Der Abstand des Schneidkopfes 3 von der oberen Werkstückoberfläche 17 kann vor, während und nach der Laserbearbeitung eingestellt werden. Die Fokuslage des Laserstrahls 16 kann durch eine Änderung des Abstands der Schneiddüse 13 von der oberen Werkstückoberfläche 17 und/oder über optische Elemente im Schneidkopf 3, beispielsweise eine adaptive Optik, eingestellt werden.

Das Prozessgas 25 dient dazu, die Schmelze aus der Schnittfuge zu treiben. Das Prozessgas wird von einer nicht dargestellten Gasstrahlerzeugungseinrichtung erzeugt. Als inertes Prozessgas wird beispielsweise Helium (He), Argon (Ar) oder Stickstoff (N₂) eingesetzt. Als reaktives Prozessgas wird üblicherweise Sauerstoff (O₂) verwendet. Bekannt ist auch die Verwendung von Gasgemischen. Das Prozessgas weist innerhalb des Schneidkopfs 3 einen vorgegebenen Prozessgasdruck (Kesseldruck) auf, tritt mit diesem Druck aus der Schneiddüse 13 aus und wird koaxial zum Laserstrahl 16 an die Bearbeitungsstelle geführt.

Wie in Figur 1 gezeigt, besteht die ebene Werkstückauflage 5 beispielsweise aus einer Vielzahl von Auflageelementen mit beispielsweise dreieckig ausgebildeten Tragpunktspitzen, welche gemeinsam eine Auflageebene für das zu bearbeitende Werkstück 9 definieren. Die Auflageelemente sind hier beispielsweise als längliche Auflagestege ausgeführt, die sich jeweils entlang der y-Richtung erstrecken und mit einem beispielsweise konstanten Zwischenabstand in paralleler Anordnung entlang der x-Richtung nebeneinander liegend angeordnet sind. Nicht näher dargestellt ist eine Absaugeinrichtung, durch welche während des Laserschneidens entstehender Schneidrauch, Schlackepartikel und kleine Abfallteile abgesaugt werden können.

Eine programmgesteuerte Steuereinrichtung 12 dient zur Steuerung/Regelung des erfindungsgemäßen Verfahrens zur Laserbearbeitung des Werkstücks 9 in der Laserbearbeitungsvorrichtung 1.

Im Weiteren erfolgt eine Beschreibung von Ausgestaltungen des Verfahrens der vorliegenden Erfindung, bei welcher ein Werkstückteil 11 aus dem Werkstück 9 ausgeschnitten wird, wobei das Werkstück 9 an der werkstücksteilseitigen Schnittkante des noch mit dem übrigen Werkstück (d.h. Restwerkstück) verbundenen Werkstückteils einer Modifikation zur Erzeugung einer Verrundungs-, Fasen- oder Senkungszone unterzogen wird. Hierbei wird in einem ersten Bearbeitungsschritt ein Abschnitt eines Schnittspalts und in mindestens einem zweiten Bearbeitungsschritt durch Modifikation des Werkstücks eine Verrundungs-, Fasen- oder Senkungszone an der werkstückteilseitigen Schnittkante des Schnittspalts erzeugt. Es wird Bezug auf die Figuren 2 bis 16 genommen, welche in dieser Reihenfolge jeweils späteren Verfahrenssituationen entsprechen.

Sei zunächst Figur 2 betrachtet, in der eine Schnittlinie 14 (gestrichelt) gezeigt ist. Die Schnittlinie 14 ist eine gedachte Linie, welche der Kontur eines aus dem Werkstück 9 herzustellenden Werkstückteils 11 entspricht. Die Kontur gibt die äußere Form des Werkstückteils 11 wieder. Das Werkstückteil 11 soll aus dem nicht näher dargestellten platten- oder rohrförmigen Werkstück 9 vollständig ausgeschnitten werden, wobei das Restwerkstück 10 verbleibt. Das Werkstückteil 11 hat hier beispielsweise eine Rechteckform mit gerundeten Ecken, wobei es sich versteht, dass das Werkstückteil 11 jede beliebige Form aufweisen kann.

In Figur 3 ist der aus dem Schneidkopf 3 austretende Laserstrahl 16 schematisch veranschaulicht. Der Laserstrahl 16 wird entlang der Schnittlinie 14 geführt, wobei bei entsprechender Streckenenergie des Laserstrahls 16 auf dem Werkstück 9 ein Schnittspalt 15 im Werkstück 9 erzeugt wird. Der Schneidkopf 3 ist zu diesem Zweck in eine Position über der Schnittlinie 14 verfahren worden, in der der Laserstrahl 16 auf eine Schneidposition A der Schnittlinie 14 trifft. Wie in Figur 3 veranschaulicht, wird der Schneidkopf 3 entlang der Schnittlinie 14 verfahren, wobei der Laserstrahl 16 von der Schneidposition A zu einer Schneidposition B bewegt wird. Hierdurch wird ein das Werkstück 9 durchtrennender Abschnitt 15-1 des Schnittspalts 15 (durchgezogene Linie) von der Schneidposition A zur Schneidposition B erzeugt. Der erste Abschnitt 15-1 des Schnittspalts 15 wird in einem ersten Abschnitt 14-1 der Schnittlinie 14 erzeugt. Der Laserstrahl 16 kann auch entfernt von der Schnittlinie 14 in das Werkstück 9 einstechen, wobei sich der Schnittspalt 15 im Sinne vorliegender Erfindung nur entlang der Kontur (d.h. Schnittlinie 14) des Werkstückteils 11 erstreckt.

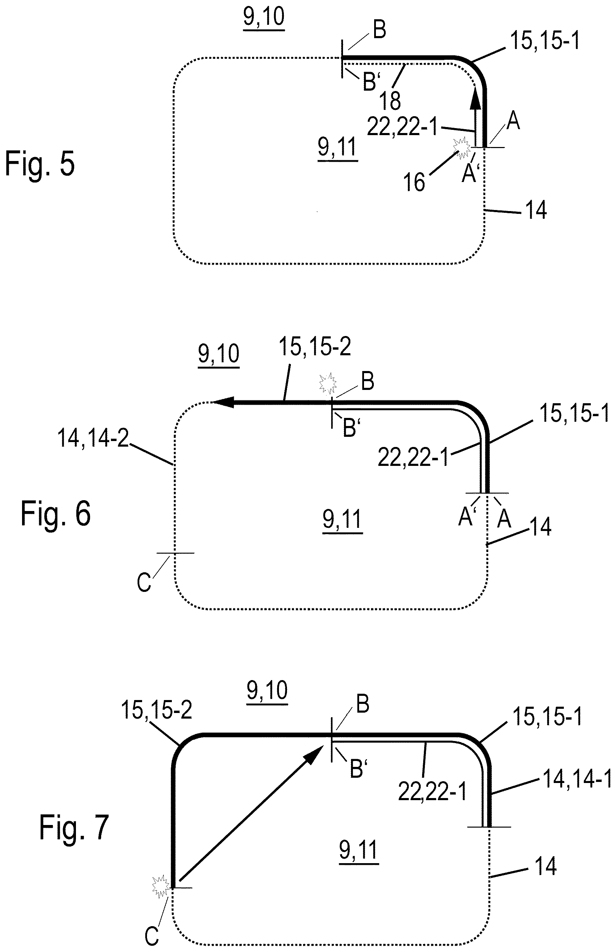

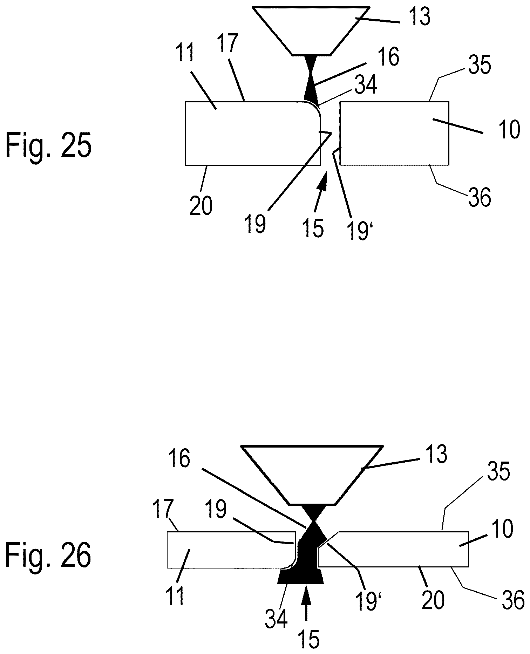

In Figur 4 ist eine Situation veranschaulicht, in der der erste Abschnitt 15-1 des Schnittspalts 15 von der Schneidposition A bis zur Schneidposition B vollständig erzeugt wurde. Die trennende Bearbeitung des Werkstücks 9 wird nun unterbrochen. Der Laserstrahl 16 wird abgeschaltet und der Schneidkopf 3 wird in eine Nachbearbeitungsposition A' nahe der Schneidposition A verfahren (siehe Figur 5). Wie in Figur 4 durch einen Pfeil veranschaulicht, erfolgt die Verfahrbewegung des Schneidkopfes 3 z.B. in direkter Linie zwischen der Schneidposition B und der Nachbearbeitungsposition A'. Die Nachbearbeitungsposition A' liegt auf einer Nachbearbeitungslinie 18 zur Erzeugung einer Verrundungszone 34 (siehe Figuren 25 und 26) oder Fasen- bzw. Senkungszone 21 (siehe Figur 23) als Nachbearbeitung des Werkstücks 9.

Wie in Figur 5 und den weiteren Figuren 6 bis 16 dargestellt, ist die Nachbearbeitungslinie 18 seitlich versetzt und äquidistant zur Schnittlinie 14 angeordnet. Der Schneidkopf 3 wird bei der Nachbearbeitung des Werkstücks 9 entlang der Nachbearbeitungslinie 18 verfahren, wobei die Verfahrbewegung des Schneidkopfs 3 geradlinig oder auch nicht-geradlinig entlang der Nachbearbeitungslinie 18 sein kann, wie weiter unten näher erläutert wird. Eine Nachbearbeitung des Werkstücks 9 erfolgt in einer Nachbearbeitungszone 22, die typischerweise eine breitere Abmessung senkrecht zu deren Erstreckung hat als die Nachbearbeitungslinie 18, was zeichnerisch nicht dargestellt ist. Die Nachbearbeitungszone 22 ist als jener Bereich des Werkstücks 9 zu verstehen, der durch die Laserbestrahlung modifiziert wird. Entsprechend der Nachbearbeitungslinie 18 erstreckt sich auch die Nachbearbeitungszone 22 entlang der Schnittlinie 14. Der Schnittspalt 15 wird durch zwei einander gegenüberliegende Schnittkanten 19, 19' begrenzt (siehe z.B. Figur 23).

Wie in Figur 5 veranschaulicht, wird der Laserstrahl 16 dann wieder angeschaltet und der Schneidkopf 3 entlang der Nachbearbeitungslinie 18 (gestrichelte Linie) verfahren, wobei der Laserstrahl 16 von der ersten Nachbearbeitungsposition A' zu einer zweiten Nachbearbeitungsposition B' nahe der Schneidposition B verfahren wird. Hierbei erfolgt eine Nachbearbeitung des Werkstücks 9 in einem ersten Abschnitt 22-1 der Nachbearbeitungszone 22.

In Figur 6 ist eine Situation gezeigt, in der das Werkstück 9 entlang des kompletten ersten Abschnitts 15-1 des Schnittspalts 15 modifiziert wurde. Der modifizierte Bereich bzw. der erste Abschnitt 22-1 der Nachbearbeitungszone 22 ist mit einer durchgezogenen Linie schematisch veranschaulicht. Analog zur abschnittsweisen Erzeugung des Schnittspalts 15 wird auch die Nachbearbeitungszone 22 abschnittsweise erzeugt.

Wie in Figur 6 veranschaulicht, wird, nun ausgehend von der Schneidposition B, das Werkstück 9 weiter trennend bearbeitet, wobei der bereits erzeugte erste Abschnitt 15-1 des Schnittspalts 15 bis zu einer Schneidposition C verlängert wird.

In Figur 7 ist eine Situation veranschaulicht, in der ein weiterer bzw. zweiter Abschnitt 15-2 des Schnittspalts 15 von der Schneidposition B zur Schneidposition C entlang eines zweiten Abschnitts 14-2 der Schnittlinie 14 erzeugt wurde. Die trennende Bearbeitung des Werkstücks 9 wird nun unterbrochen. Der Laserstrahl 16 wird abgeschaltet und der Schneidkopf 3 wird in gerader Linie in eine Position über der Nachbearbeitungsposition B' verfahren, wie durch einen Pfeil veranschaulicht ist.

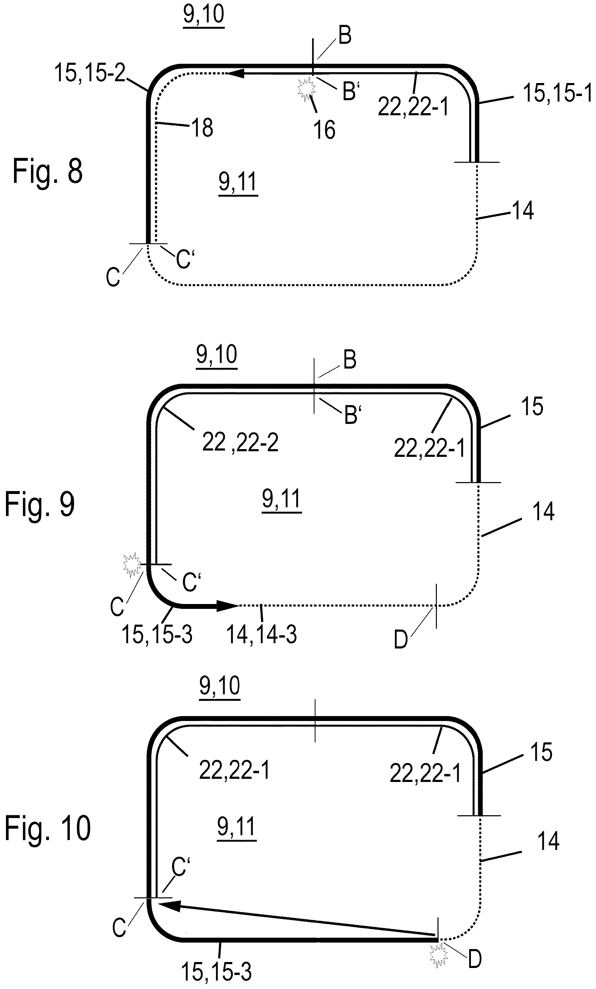

Wie in Figur 8 veranschaulicht, wird der Laserstrahl 16 nun wieder angeschaltet und der Schneidkopf 3 entlang der Nachbearbeitungslinie 18 verfahren, wobei der Laserstrahl 16 von der Nachbearbeitungsposition B' zu einer Nachbearbeitungsposition C' nahe der Schneidposition C verfahren wird.

In Figur 9 ist eine Situation gezeigt, in der das Werkstück 9 entlang des kompletten zweiten Abschnitts 15-2 des Schnittspalts 15 zwischen der Nachbearbeitungsposition B' und der Nachbearbeitungsposition C' in einem weiteren bzw. zweiten Abschnitt 22-2 der Nachbearbeitungszone 22 modifiziert wurde. Der zweite Abschnitt 22-2 der Nachbearbeitungszone 22 verlängert den zuvor erzeugten ersten Abschnitt 22-1 der Nachbearbeitungszone 22.

Wie in Figur 9 veranschaulicht, wird anschließend, ausgehend von der Schneidposition C, das Werkstück 9 weiter trennend bearbeitet, wobei der bereits erzeugte Teil des Schnittspalts 15 bis zu einer Schneidposition D verlängert wird.

In Figur 10 ist eine Situation veranschaulicht, in der ein dritter Abschnitt 15-3 des Schnittspalts 15 von der Schneidposition C zur Schneidposition D entlang eines dritten Abschnitts 14-3 der Schnittlinie 14 erzeugt wurde. Die trennende Bearbeitung des Werkstücks 9 wird nun unterbrochen. Der Laserstrahl 16 wird abgeschaltet und der Schneidkopf 3 wird in eine Position über der Nachbearbeitungsposition C' der Nachbearbeitungslinie 18 für die nun folgende Nachbearbeitung verfahren. Der dritte Abschnitt 15-3 des Schnittspalts 15 verlängert den zweiten Abschnitt 15-2 des Schnittspalts 15.

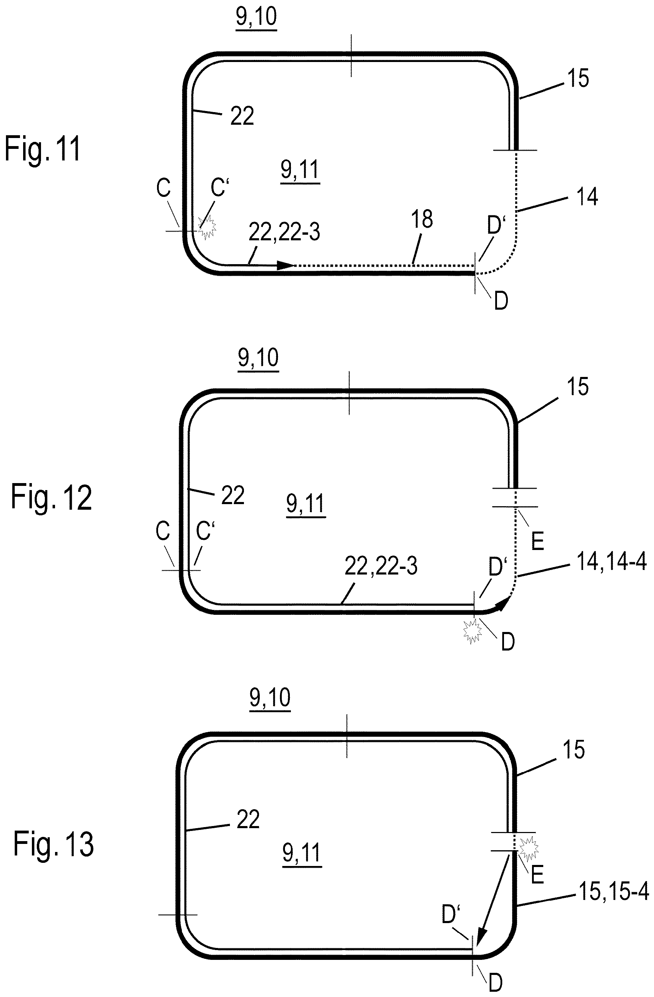

Wie in Figur 11 veranschaulicht, wird der Laserstrahl 16 nun wieder angeschaltet und der Schneidkopf 3 entlang der Nachbearbeitungslinie 18 verfahren, wobei der Laserstrahl 16 von der Nachbearbeitungsposition C' zu einer Nachbearbeitungsposition D' nahe der Schneidposition D verfahren wird.

In Figur 12 ist eine Situation gezeigt, in der das Werkstück 9 entlang des kompletten dritten Abschnitts 15-3 des Schnittspalts 15 von der Nachbearbeitungsposition C' bis zur Nachbearbeitungsposition D' in einem dritten Abschnitt 22-3 der Nachbearbeitungszone 22 modifiziert wurde. Der dritte Abschnitt 22-3 der Nachbearbeitungszone 22 verlängert den zuvor erzeugten zweiten Abschnitt 22-2 der Nachbearbeitungszone 22.

Wie in Figur 12 veranschaulicht, wird, ausgehend von der Schneidposition D, das Werkstück 9 nun weiter trennend bearbeitet, wobei der bereits erzeugte Teil des Schnittspalts 15 bis zu einer Schneidposition E verlängert wird.

In Figur 13 ist eine Situation veranschaulicht, in der ein vierter Abschnitt 15-4 des Schnittspalts 15 von der Schneidposition D zur Schneidposition E entlang eines vierten Abschnitts 14-4 der Schnittlinie 14 erzeugt wurde. Die trennende Bearbeitung des Werkstücks 9 wird unterbrochen. Der vierte Abschnitt 15-4 des Schnittspalts 15 verlängert den dritten Abschnitt 15-3 des Schnittspalts 15.

Der Laserstrahl 16 wird nun abgeschaltet und der Schneidkopf 3 wird in eine Position über der Nachbearbeitungsposition D' der Nachbearbeitungslinie 18 für die folgende Nachbearbeitung verfahren.

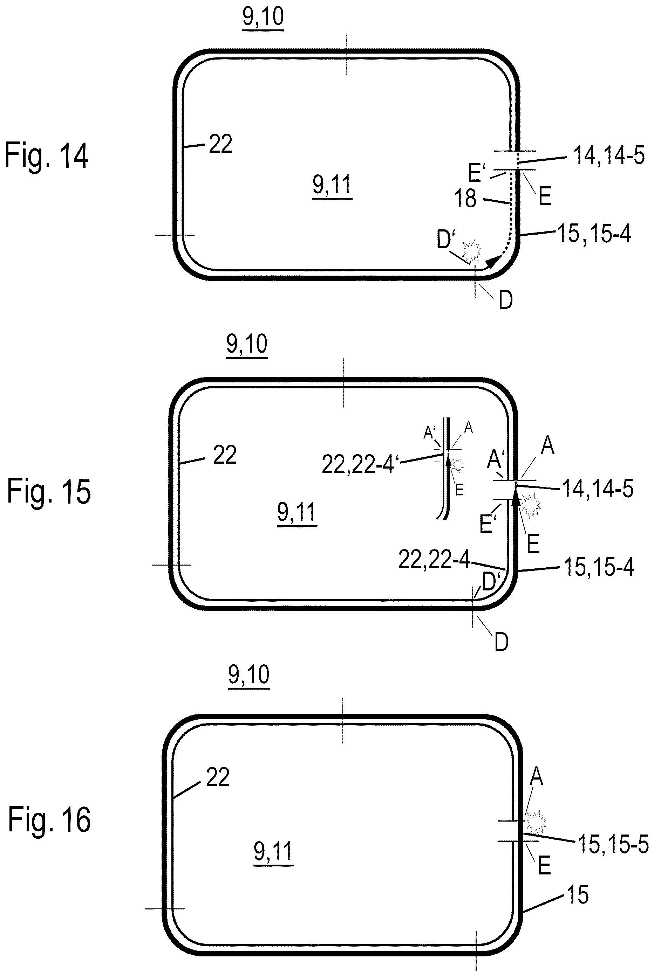

Wie in Figur 14 veranschaulicht, wird der Laserstrahl 16 wieder angeschaltet und der Schneidkopf 3 entlang der Nachbearbeitungslinie 18 verfahren, wobei der Laserstrahl 16 von der Nachbearbeitungsposition D' zu einer Nachbearbeitungsposition E' nahe der Schneidposition E verfahren wird.

In Figur 15 ist eine Situation gezeigt, in der das Werkstück 9 entlang des kompletten vierten Abschnitts 15-4 des Schnittspalts 15 von der Nachbearbeitungsposition D' bis zur Nachbearbeitungsposition E' in einem vierten Abschnitt 22-4 der Nachbearbeitungszone 22 modifiziert wurde. Der vierte Abschnitt 22-4 der Nachbearbeitungszone 22 verlängert den zuvor erzeugten dritten Abschnitt 22-3 der Nachbearbeitungszone 22.

Wie in Figur 15 veranschaulicht, wird anschließend, ausgehend von der Schneidposition E, das Werkstück 9 weiter trennend bearbeitet, wobei der bereits erzeugte Teil des Schnittspalts 15 entlang eines fünften Abschnitts 14-5 der Schnittlinie 14 bis zur Schneidposition A verlängert wird. Hierdurch wird der Schnittspalt 15 geschlossen und das Werkstückteil 11 vom Restwerkstück 10 freigeschnitten, so dass es entfernt werden kann. Es erfolgt keine weitere Nachbearbeitung des freigeschnittenen Werkstückteils 11, da am freigeschnittenen Werkstückteil 11 durch das Verfahren keine Nachbearbeitung erfolgt. Hierbei wird ein fünfter Abschnitt 15-5 des Schnittspalts 15 erzeugt, der den vierten Abschnitt 15-4 des Schnittspalts 15 verlängert.

Bei allen trennenden Bearbeitungen hat der Laserstrahl 16 eine Streckenenergie, die so bemessen ist, dass das Werkstück 9 durchtrennt wird, d.h. der Laserstrahl 16 ist im trennenden Modus. Bei allen Nachbearbeitungen des Werkstücks 9 zur Erzeugung einer Verrundungs-, Fasen- oder Senkungszone hat der Laserstrahl 16 eine Streckenenergie, die so bemessen ist, dass das Werkstück 9 weder fügend noch trennend bearbeitet wird, d.h. der Laserstrahl 16 ist im nicht-trennenden Modus. Die Strahlachse des Laserstrahls 16 ist beispielsweise achsparallel zur konischen Schneiddüse 13 und trifft senkrecht auf das Werkstück 9. Bei allen trennenden Bearbeitungen sowie bei allen Nachbearbeitungen wird der Laserstrahl 16 mit einer unveränderten senkrechten Ausrichtung seiner Strahlachse relativ zur oberen Werkstückoberfläche 17 auf die obere Werkstückoberfläche 17 gerichtet.

Die Nachbearbeitungen des Werkstücks 9 können in vielfältiger Weise variiert werden. Beispielsweise könnten die Nachbearbeitungspositionen auch so positioniert sein, dass das Werkstück 9 nur entlang eines Teils des jeweiligen Abschnitts 14-1 bis 14-5 der Schnittlinie 14 oder eines Teils des jeweiligen Abschnitts 15-1 bis 15-5 des Schnittspalts 15 modifiziert wird, d.h. die jeweiligen Abschnitte 22-1 bis 22-4 der Nachbearbeitungszone 22 erstrecken sich nicht über die komplette Länge der zugehörigen Abschnitte 14-1 bis 14-5 der Schnittlinie 14 oder nicht über die komplette Länge der zugehörigen Abschnitte 15-1 bis 15-5 des Schnittspalts 15. Beispielsweise könnte die Richtung zur Erzeugung der Nachbearbeitung auch entgegengesetzt zur Richtung der Erzeugung des Schnittspalts 15 sein.

Wie insbesondere aus Figur 16 ersichtlich ist, wird bei der letzten (fünften) Trennprozedur ein Abschnitt 15-5 des Schnittspalts 15 erzeugt, dessen Länge kleiner ist als die jeweiligen Längen der bei allen vorhergehenden Trennvorgängen erzeugten Abschnitte des Schnittspalts 15. Durch diese Maßnahme kann in vorteilhafter Weise erreicht werden, dass ein möglichst geringer Teil des Schnittspalts 15 keiner Nachbearbeitung unterzogen wird. Möglich wäre auch, dass die Längen der bei den Trennprozeduren erzeugten Teile des Schnittspalts 15, ausgehend vom Freischneidpunkt des Werkstückteils 11, beispielsweise kontinuierlich zunehmen.

Im Hinblick auf eine vollständige Nachbearbeitung des Werkstückteils 11 ist die nachfolgende Ausgestaltung des erfindungsgemäßen Verfahrens besonders vorteilhaft. Hierbei wird nach dem Modifizieren des Werkstücks 9 im vierten Abschnitt 22-4 der Nachbearbeitungszone 22, jedoch noch vor dem Erzeugen des fünften Abschnitts 15-5 des Schnittspalts 15, also vor dem Freischneiden des Werkstückteils 11, eine Nachbearbeitung des Werkstücks 9 entlang eines fünften Abschnitts 14-5 der Schnittlinie 14 zwischen den Nachbearbeitungspositionen E' und A' durchgeführt. Dies ist anhand einer Einfügung in Figur 15 schematisch veranschaulicht. Hierbei wird der vierte Abschnitt 22-4 der Nachbearbeitungszone 22 bis zur Nachbearbeitungsposition A' verlängert. Der verlängerte vierte Abschnitt 22-4' der Nachbearbeitungszone 22 erstreckt sich hier demnach bis zur Nachbearbeitungsposition A', so dass sich die Nachbearbeitungszone 22 als geschlossener, länglicher Bereich vollumfänglich über die komplette Kontur des Werkstückteils 11 erstreckt. Insbesondere kann bei einer solchen Nachbearbeitung in vorteilhafter Weise eine Fasenzone an einer oder beiden später zu erzeugenden Schnittkanten des Schnittspalts 15 auch im Bereich des fünften Abschnitts 14-5 der Schnittlinie 14 erzeugt werden. Anschließend wird das Werkstückteil 11 durch Erzeugen des fünften Abschnitts 15-2 des Schnittspalts 15 freigeschnitten.

Es versteht sich, dass die Anzahl der Abschnitte 14-1 bis 14-5 der Schnittlinie 14 bzw. der Abschnitte 15-1 bis 15-5 des Schnittspalts 15 in den Ausgestaltungen der Figuren 2 bis 16 beispielhaft ist und größer oder kleiner sein kann.

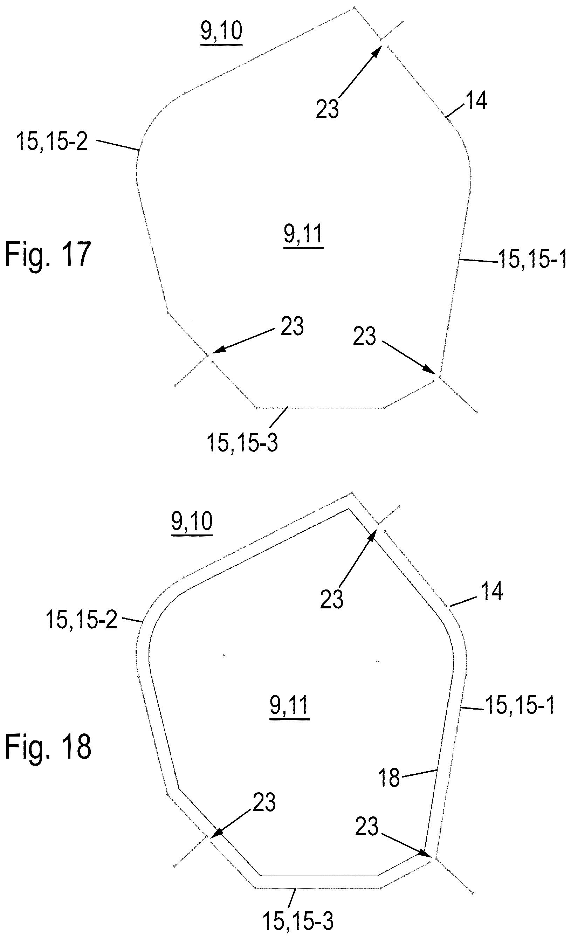

Anhand der Figuren 2 bis 16 wurden beispielhafte Ausgestaltungen des Verfahrens beschrieben, wobei in einer alternierenden Abfolge jeweils zunächst eine trennende Bearbeitung des Werkstücks 9 und anschließend eine Nachbearbeitung des Werkstücks 9 erfolgt. Gleichermaßen wäre es auch möglich, dass zunächst verschiedene Abschnitte des Schnittspalts 15 erzeugt werden, die durch Stege, insbesondere Microjoints oder Nanojoints, voneinander getrennt sind, wobei anschließend eine Nachbearbeitung des Werkstücks 9 erfolgt. Dies ist anhand der Figuren 17 und 18 veranschaulicht.

Wie in Figur 17 gezeigt, werden gemäß einer weiteren Ausgestaltung des erfindungsgemäßen Verfahrens zunächst drei Abschnitte 15-1, 15-2, 15-3 eines Schnittspalts 15 erzeugt, die durch Stege 23, hier beispielsweise Microjoints oder Nanojoints, voneinander getrennt sind. Für eine Erzeugung der Abschnitte 15-1, 15-2, 15-3 des Schnittspalts 15 wird der Laserstrahl 16 jeweils entfernt von der Kontur des Werkstückteils 11 eingestochen, zunächst an die Kontur des Werkstückteils 11 geführt und anschließend an der Kontur entlanggeführt. Der Schnittspalt 15 wird entlang einer in Figur 17 nicht näher dargestellten Schnittlinie 14 erzeugt. Es versteht sich, dass eine größere oder kleinere Anzahl von Abschnitten des Schnittspalts 15 entlang der Kontur des Werkstückteils 11 vorgesehen sein kann, wobei die Anzahl der Abschnitte des Schnittspalts 15 der Anzahl der Stege 23 entspricht.

Wie in Figur 18 veranschaulicht, erfolgt nach Erzeugen der Abschnitte 15-1, 15-2, 15-3 des Schnittspalts 15 eine Nachbearbeitung des Werkstücks 9 zum Erzeugen einer Verrundungszone 34, Fasen- bzw. Senkungszone 21 an der werkstückteilseitigen Schnittkante 19, wobei der Laserstrahl 16 entlang einer Nachbearbeitungslinie 18 geführt wird. Die Nachbearbeitungslinie 18 ist lateral versetzt und äquidistant zur Schnittlinie 14 angeordnet. Die Nachbearbeitungslinie 18 erstreckt sich insbesondere auch über die Bereiche der Schnittlinie 14 hinweg, in der ein Steg 23 angeordnet ist, d.h. es erfolgt eine Nachbearbeitung des Werkstücks 9 auch im Bereich der Stege 23. Wie Versuche gezeigt haben, kann bei entsprechend klein dimensionierten Stegen 23 in hinreichender Weise eine Nachbearbeitung des Werkstücks 9 erfolgen, da hierdurch die Gasdynamik des Prozessgases nur geringfügig beeinträchtigt wird.

Nach Nachbearbeitung des Werkstücks 9 zum Erzeugen einer Verrundungszone 34, Fasen- bzw. Senkungszone 21 werden die Stege 23 durchtrennt, beispielsweise mittels des Laserstrahls 16 oder manuell und das Werkstückteil 11 wird vom Restwerkstück 10 entfernt. Denkbar ist auch, dass schon durch die Nachbearbeitung des Werkstücks 9 im Bereich der Stege 23 die Stege 23 durchtrennt werden, so dass durch die Nachbearbeitung gleichzeitig ein Freischneiden des Werkstückteils 11 erfolgt. Dies kann insbesondere dann der Fall sein, wenn die Stege 23 als Nanojoints mit verringerter Höhe ausgebildet sind.

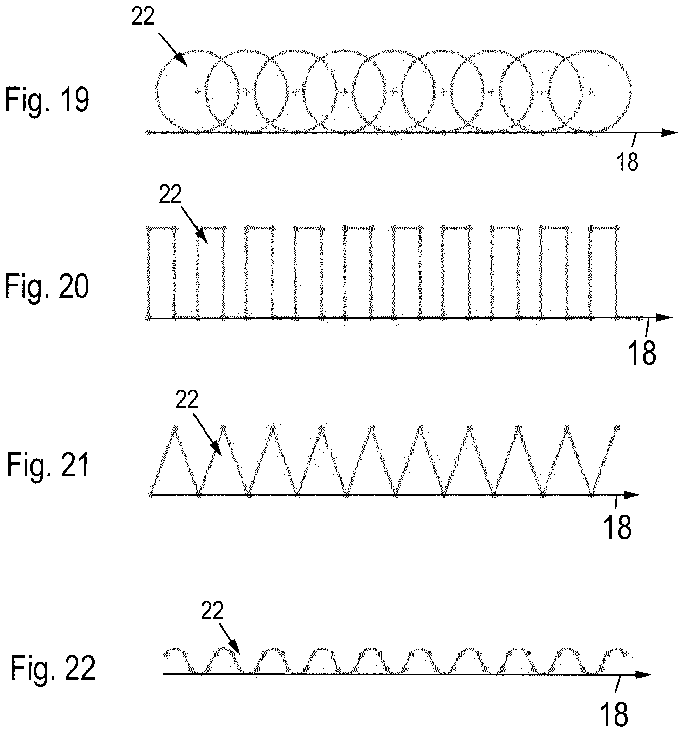

Bei der Erzeugung des Schnittspalts 15 wird der Laserstrahl 16 stets geradlinig entlang der Schnittlinie 14 (Kontur) des Werkstückteils 11 geführt. Bei der Nachbearbeitung des Werkstücks 9 wird der Laserstrahl 16 geradlinig oder nicht-geradlinig entlang der Nachbearbeitungslinie 18 geführt. Insbesondere kann der Laserstrahl 16 bei der Nachbearbeitung des Werkstücks 9 auch Bewegungskomponenten quer (senkrecht) zur Nachbearbeitungslinie 18 haben, wobei einer Primärbewegung eine Sekundärbewegung überlagert ist. Dies ist anhand der Figuren 19 bis 22 veranschaulicht.

In den Figuren 19 bis 22 sind verschiedene beispielhafte Ausgestaltungen der Führung des Laserstrahls 16 entlang der Nachbearbeitungslinie 18 gezeigt. Für eine einfache zeichnerische Darstellung sei angenommen, dass sich die Nachbearbeitungslinie 18 horizontal von links nach rechts erstreckt. Eine Bewegung des Laserstrahls 16 auf der Nachbearbeitungslinie 18 entspricht der Primärbewegung, der eine Sekundärbewegung mit Bewegungskomponenten quer (senkrecht) zur Nachbearbeitungslinie 18 überlagert ist.

In Figur 19 ist eine Variante veranschaulicht, bei der der Laserstrahl 16 entlang von geschlossenen Kreisen 24 (d.h. geschlossene Bahnabschnitte des Laserstrahls 16), die längs der Nachbearbeitungslinie 18 reihenförmig angeordnet sind, geführt wird. Nach Durchfahren eines jeweiligen Kreises 24 wird der Laserstrahl 16 jeweils ein Stück weit geradlinig entlang der Nachbearbeitungslinie 18 verfahren und dann entlang des nächsten Kreises 24 geführt. In Richtung der Nachbearbeitungslinie 18 überlappen sich die Kreise 24. Anstatt von Kreisen könnte der Laserstrahl 16 auch entlang Ellipsen geführt werden. Die Bewegung des Laserstrahls 16 weist somit Bewegungskomponenten geradlinig entlang der Nachbearbeitungslinie 18 und quer zur Nachbearbeitungslinie 18 auf. Die Nachbearbeitungszone 22, welche sich aus dem durch den Laserstrahl 16 überstrichenen Bereich des Werkstücks 9 ergibt, kann durch diese Maßnahme relativ breit ausgebildet werden, insbesondere zur Erzeugung tiefer und/oder breiter Fasen- bzw. Senkungszonen.

In den Figuren 20 bis 22 sind jeweils Varianten veranschaulicht, bei der der Laserstrahl 16 mäanderförmig mit Hin- und Her-Bewegungen entlang der Nachbearbeitungslinie 18 geführt wird. Auch hier umfasst die Bewegung des Laserstrahls 16 Bewegungskomponenten quer zur Nachbearbeitungslinie 18. In Figur 20 ist die mäanderförmige Bewegung des Laserstrahls 16 rechteckförmig, in Figur 21 dreieckförmig (sägezahnförmig) und in Figur 22 sinusförmig ausgebildet. Dies ist nur beispielhaft zu verstehen, wobei gleichermaßen auch andere mäanderförmige Bewegungen des Laserstrahls 16 möglich sind. Im Grunde ist erfindungsgemäß jede mäanderförmige Hin- und Herbewegung des Laserstrahls 16, die sich entlang der Nachbearbeitungslinie 18 erstreckt, erfindungsgemäß möglich und vorgesehen. Auch durch die mäanderförmige Bewegung des Laserstrahls 16 kann eine relativ breite Nachbearbeitungszone 22 erzeugt werden, insbesondere zur Erzeugung besonders tiefer und/oder breiter Fasen- bzw. Senkungszonen.

In den Figuren 23 und 24 ist die Erzeugung einer Fasen- bzw. Senkungszone 21 veranschaulicht. Figur 24 zeigt anhand einer perspektivischen Ansicht, wie der Schneidkopf 3 bzw. Laserstrahl 16 entlang des Schnittspalts 15 geführt wird, um eine Fasen- bzw. Senkungszone 21 zu erzeugen. Wie in der Querschnittansicht von Figur 23 (Schnitt senkrecht zur Ebene des Werkstücks 9) gut erkennbar, wird bei der Nachbearbeitung des Werkstücks 9 durch den Laserstrahl 16 die werkstückteilseitige Schnittkante 19 angrenzend an die obere Werkstückoberfläche 17 mit der Fasen- bzw. Senkungszone 21 versehen. Die Nachbearbeitungslinie 18 ist relativ zur Schnittlinie 14 seitlich (z.B. äquidistant) versetzt, was in Figur 23 und 24 nicht dargestellt ist. Hier erfolgt die Erzeugung der Fasen- bzw. Senkungszone 21 beispielsweise durch mehrere Schritte bzw. Nachbearbeitungen, die am selben Abschnitt des Schnittspalts 15 durchgeführt werden. Bei einer ersten Nachbearbeitung wird das Werkstückteil 11 in einem die werkstückteilseitige Schnittkante 19 enthaltenden Bereich bestrahlt. Die Nachbearbeitungslinie 18 ist relativ zur Schnittlinie 14 seitlich (z.B. äquidistant) versetzt in Richtung zum Werkstückteil 11. Dies kann gegebenenfalls ein- oder mehrmals wiederholt werden, um die Fasen- bzw. Senkungszone 21 weiter weg von der werkstückteilseitigen Schnittkante 19 auszubilden. Hierbei wird die werkstückteilseitige Schnittkante 19 nicht mehr mitbestrahlt. Denkbar wäre auch, zunächst das Werkstückteil 11 so zu bestrahlen, dass ein nicht die werkstückteilseitige Schnittkante 19 enthaltender Bereich bestrahlt wird, gefolgt von einem stetigen Versetzen der Nachbearbeitungslinie 18 in Richtung des Schnittspalts 15, wobei schließlich die werkstückteilseitige Schnittkante 19 mitbestrahlt wird. Bei der Nachbearbeitung des Werkstücks 9 zur Erzeugung der Fasen- bzw. Senkungszone 21 wird die werkstückteilseitige Schnittkante 19 jedenfalls in einem der für die Nachbearbeitung durchgeführten Schritte mitbestrahlt.

Besonders vorteilhaft wird der Laserstrahl 16 bei der Erzeugung der Fasen- bzw. Senkungszone 21 entlang der Schnittlinie 14 mäandrierend oder entlang reihenförmig angeordneter Kreise oder Ellipsen bewegt, wie anhand der Figuren 19 bis 22 veranschaulicht ist, wodurch die Breite und/oder Tiefe der Fasen- bzw. Senkungszone 21 erheblich vergrößert werden kann.

In den Figuren 25 und 26 ist die Erzeugung einer Verrundungszone 34 an der werkstückteilseitigen Schnittkante 19 des Werkstückteils 11 näher erläutert. In Figur 25 wird bei der Nachbearbeitung des Werkstücks 9 durch den Laserstrahl 16 die werkstückteilseitige Schnittkante 19 des Werkstückteils 11 angrenzend an die Werkstückoberfläche 17 der Werkstückoberseite 35 durch Umschmelzen verrundet, wobei eine Verrundungszone 34 erzeugt wird. Die Nachbearbeitungslinie 18 ist relativ zur Schnittlinie 14 seitlich (z.B. äquidistant) versetzt angeordnet, wobei bevorzugt ist, wenn ein maximaler Abstand zwischen Nachbearbeitungslinie 18 und Schnittlinie 14 die halbe Schnittspaltbreite des Schnittspalts 15 zuzüglich des Radius des Strahlkegels des Laserstrahls 16 an der Werkstückoberfläche 17 beträgt. Dies ist in Figur 25 nicht dargestellt. In Figur 26 wird bei der Nachbearbeitung des Werkstücks 9 durch den Laserstrahl 16 gleichzeitig die werkstückteilseitige Schnittkante 19 angrenzend an die Werkstückoberfläche 20 an der Werkstückunterseite 36 verrundet, wobei eine Verrundungszone 34 erzeugt wird, und die restwerkstückseitige Schnittkante 19' angrenzend an die Werkstückoberfläche 17 geglättet. Die Nachbearbeitungslinie 18 ist relativ zur Schnittlinie 14 seitlich (z.B. äquidistant) versetzt, was in Figur 26 nicht dargestellt ist.

In Figur 27 ist die Erzeugung einer Fasen- bzw. Senkungszone 21 oder Verrundungszone 34 an der werkstückteilseitigen Schnittkante 19 entlang des Schnittspalts 15 in einer Schnittansicht senkrecht zur Ebene des Werkstücks 9 schematisch veranschaulicht. Die Verfahrbewegung des Laserbearbeitungskopfs 3 entlang des Schnittspalts 15 bzw. entlang der werkstückteilseitigen Schnittkante 19 ist anhand eines Pfeils gekennzeichnet. Der Bearbeitungsstrahl 26 umfasst den Laserstrahl 16 und das Prozessgas 25. Die beim Erzeugen der Fasen- bzw. Senkungszone 21 oder Verrundungszone 34 entstehende Schmelze wird durch das Prozessgas 25 durch den Schnittspalt 15 getrieben.

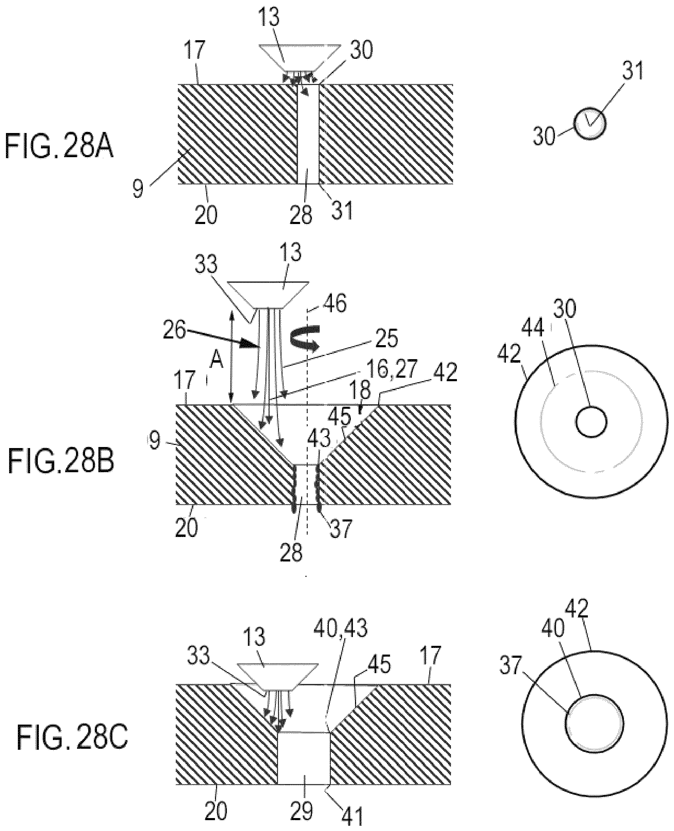

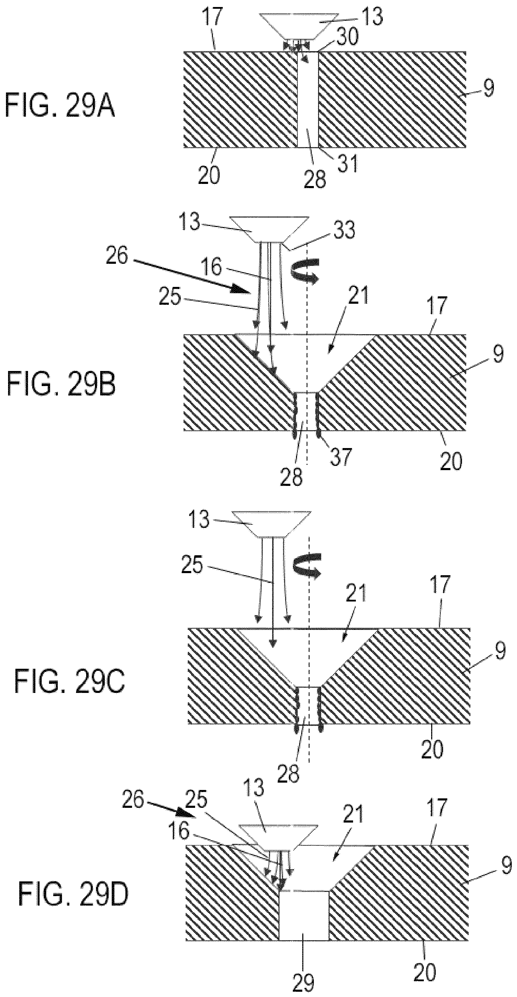

Die anhand der Figuren 28A bis 28C sowie 29A bis 29D veranschaulichten Ausgestaltungen des erfindungsgemäßen Verfahrens können in zwei Schritten oder optional in drei Schritten durchgeführt werden, wobei Löcher, jeweils mit einer Fasen- bzw. Senkungszone, im Werkstück hergestellt werden. Das Werkstückteil ist ein Bereich des verbleibenden Werkstücks (Restwerkstück) und dazu vorgesehen, nach Erzeugen von einem oder mehreren Löchern, die jeweils mit einer Fasen- bzw. Senkungszone versehen sind, aus dem Werkstück ausgeschnitten zu werden. Die Löcher mit einer jeweiligen Fasen- bzw. Senkungszone werden typischer Weise in einem aus dem Werkstück auszuschneidenden Werkstückteil ausgebildet.

Bei der Variante mit zwei Schritten wird zunächst aus dem Werkstück eine lochförmige Ausnehmung ausgeschnitten, unter Ausbildung eines Abfallstücks und eines Werkstückteils. Die Außenkontur des Abfallstücks und die Innenkontur der lochförmigen Ausnehmung im Werkstückteil sind durch die Schnittline vorgegeben, wobei die eine der beiden Schnittkanten eine werkstückteilseitige Schnittkante und die andere der beiden Schnittkanten eine abfallstückseitige Schnittkante ist. Anschließend wird die werkstückteilseitige Schnittkante zur Erzeugung einer Fasen- bzw. Senkungszone an der werkstückteilseitigen Schnittkante bearbeitet. Bei der Variante mit drei Schritten wird zunächst aus dem Werkstück eine lochförmige Ausnehmung ausgeschnitten, wobei ein Vorloch erzeugt wird. es Abfallstücks und eines Werkstückteils. Anschließend wird die werkstückteilseitige Schnittkante zur Erzeugung einer Fasen- bzw. Senkungszone an der werkstückteilseitigen Schnittkante bearbeitet. Anschließend wird das Vorloch zur Erzeugung eines Endlochs aufgeweitet.

Zum Zwecke einer leichteren Bezugnahme, wird das im ersten Schritt im Werkstück erzeugte Loch als "Loch" oder "Vorloch" bezeichnet, je nachdem ob die Erzeugung der Löcher, die jeweils mit einer Fasen- bzw. Senkungszone versehen sind, in zwei Schritten oder drei Schritten erfolgt. Nur beim Durchführen von drei Schritten stellt das Loch ein Vorloch dar, aus dem durch Aufweiten ein Endloch erzeugt wird. Der Begriff "(Vor-)Loch" kann sich demnach auf die Verfahrensführung in zwei oder drei Schritten beziehen. Entsprechend wird für die Schnittlinie zum Erzeugen des Vorlochs der Begriff "Vorloch-Schnittlinie" und für die Schnittlinie zum Erzeugen des Endlochs der Begriff "Endloch-Schnittlinie" verwendet. Die zur Erzeugung angesenkter Löcher mit drei Schritten verwendeten Bezeichnungen "Vorloch" und "Endloch" dienen lediglich zur Unterscheidung verschiedener Phasen des Verfahrens zur Herstellung eines Lochs mit Fasen- bzw. Senkungszone, wobei sich das Endloch aus einer Verbreiterung des Vorlochs ergibt. Mit der Erzeugung des Endlochs innerhalb der Fase bzw. Senkung wird das fertige Loch hergestellt.

Es wird nun Bezug auf die Figuren 28A bis 28C sowie 29A bis 29D genommen, worin beispielhafte Ausgestaltungen des erfindungsgemäßen Verfahrens zur Laserstrahlbearbeitung eines Werkstücks 9 durch die Strahlvorrichtung 1 von Figur 1 veranschaulicht sind. Zum Zwecke einer vereinfachten Darstellung und da zum Verständnis der Erfindung ausreichend, sind jeweils nur die Schneiddüse 13 sowie der Laserstrahl 16 und das Prozessgas 25 in Kombination mit dem Werkstück 9 dargestellt. Das Werkstück 9 befindet sich, wie üblich, in einer horizontalen Lage auf der Werkstückauflage 5.

Seien zunächst die Figuren 28A bis 28C betrachtet, worin jeweils in den linken Abbildungen das plattenförmige Werkstück 9 mit den beiden ebenen Werkstückoberflächen 17, 20 und die Schneiddüse 13 in einer vertikalen Schnittansicht in schematischer Weise gezeigt sind. Die rechten Abbildungen der Figuren 28A bis 28C veranschaulichen die Verfahrensschritte in schematischer Weise anhand jeweiliger Aufsichten. Die obere Werkstückoberfläche 17 ist der Schneiddüse 13 zugewandt, die untere Werkstückoberfläche 20 von der Schneiddüse 13 abgewandt. Der aus der Düsenspitze 33 der Schneiddüse 13 austretende Laserstrahl 16 und das Prozessgas 25 treffen auf das Werkstück 9. Der Laserstrahl 16 hat die Form eines fokussierten Strahlkegels mit einer zentrischen Strahlachse 27. Die zentrische Strahlachse 27 und somit der Laserstrahl 16 ist senkrecht zur oberen Werkstückoberfläche 17 gerichtet. Koaxial zum Laserstrahl 15 tritt das Prozessgas 25 aus der Schneiddüse 13 aus, wobei der Laserstrahl 16 und das Prozessgas 25 durch die Schneiddüste gemeinsam geführt werden. Der Bearbeitungsstrahl 26 umfasst den Laserstrahl 16 und das Prozessgas 25.

In Figur 28A wurde die Schneiddüse 13 von einer Ausgangsposition zumindest mit einer vertikalen Bewegungskomponente zum Werkstück 9 hin verfahren, so dass die Schneiddüse 13 einen relativ kleinen Arbeitsabstand A vom Werkstück 9 hat. Vorzugsweise beträgt der Arbeitsabstand A der Schneiddüse 13 von der oberen Werkstückoberfläche 17 weniger als 2 mm. Die Fokuslage des Laserstrahls 16 resultiert in einem engen Strahlfleck mit einem kleinen Strahldurchmesser auf dem Werkstück 9. Die Fokuslage und damit der Strahldurchmesser sind so gewählt, dass die Streckenenergie des Laserstrahls 16 auf dem Werkstück 9 so groß ist, dass der Laserstrahl 16 zur schneidenden bzw. trennenden Bearbeitung des Werkstücks 9 geeignet ist.

Wie in Figur 28A gezeigt, wird der schneidende Laserstrahl 16 entlang einer kreisförmigen Vorloch-Schnittlinie 32 zur Erzeugung eines (Vor-)Lochs 28 geführt, wodurch ein kreisförmig-geschlossener Schnittspalt erzeugt wird. Hierdurch wird ein im Querschnitt rundes bzw. scheibenförmiges Abfallteil (Butzen) aus dem Werkstück 9 vollständig ausgeschnitten. Der ausgeschnittene Butzen fällt durch sein Eigengewicht nach unten weg. Durch Entfernen des Butzens vom Werkstück 9 wird ein im Querschnitt rundes (Vor-)Loch 28 im Werkstück 9 erzeugt. Der Durchmesser des (Vor-)Lochs 28 bemisst sich in der Ebene des Werkstücks 9. Aus dem (Vor-)Loch 28 kann optional im weiteren Verfahren durch Verbreitern seines Durchmessers ein verbreitertes Loch, nämlich ein Endloch 29 erzeugt werden (siehe Figur 28C).

Das runde (Vor-)Loch 28 ist entsprechend seiner Herstellungsweise ein Durchgangsloch und durchbricht das Werkstück 9, wobei das (Vor-)Loch 28 von einer vom Werkstück 9 gebildeten (Vor-)Lochwandung 38 umgeben ist, die sich durchgehend von der oberen Werkstückoberfläche 17 bis zur unteren Werkstückoberfläche 20 erstreckt. An der oberen Werkstückoberfläche 17 wird das (Vor-)Loch 28 von einer kreisförmigen oberen (Vor-)Loch-Schnittkante 30 umgrenzt, an der unteren Werkstückoberfläche 20 von einer kreisförmigen unteren (Vor-)Loch-Schnittkante 31. Die beiden (Vor)Loch-Schnittkanten 30, 31 sind jeweils Teil der (Vor-)Lochwandung 38. In Figur 28A sind die (Vorloch-)Schnittlinie 32 und die obere (Vor-)Loch-Schnittkante 30 aufgrund der besseren zeichnerischen Darstellung relativ weit voneinander beabstandet dargestellt, wobei es sich versteht, dass dies in der Praxis nicht der Fall sein muss. Das runde (Vor-)Loch 28 ist in Bezug auf seine Mittenachse 46 (siehe Figur 28B) radialsymmetrisch ausgebildet. In der Ebene des Werkstücks 9 ist in Bezug auf das (Vor-)Loch 28 und dessen Mittenachse 46 eine radiale Richtung definiert.

Optional kann das Verfahren um einen Schritt ergänzt werden, der vor dem Schneiden des (Vor-)Lochs 28 durchgeführt wird. Dieser Schritt wird vorzugsweise dann eingesetzt, wenn (Vor-)Löcher 28 mit einem Durchmesser von mindestens 7 mm herzustellen sind und/oder eine Dicke des Werkstücks 9 von mindestens 4 mm vorliegt. Hierbei wird der später an seiner Kontur auszuschneidende Butzen durch ein oder mehrere Schnittspalte in kleinere Teile zerschnitten, wodurch stets erreicht werden kann, dass der Butzen zuverlässig und sicher nach unten aus dem Werkstück 9 fällt und das ausgeschnittene (Vor-)Loch 16 immer frei ist. Beispielsweise werden im Bereich des auszuschneidenden Butzens sich kreuzende Schnittspalte, gegebenenfalls überlagert durch einen Schnittspalt in Spiralform, eingebracht. Ein mögliches Verfahren zum Zerteilen des Butzens ist beispielsweise in US 8716625 B2 beschrieben.

Nach Erzeugen des runden (Vor-)Lochs 28 wird eine zum (Vor-)Loch 28 konzentrische runde Fasen- bzw. Senkungszone 21 erzeugt. Dies wird im Weiteren anhand von Figur 28B veranschaulicht.

Für die Erzeugung der Fasen- bzw. Senkungszone 21 hat die Schneiddüse 13 einen relativ großen Arbeitsabstand A von der ersten Werkstückoberfläche 17, wobei sich das Werkstück 9 im divergenten Bereich des Laserstrahls 16 befindet, was zu einem breiten Strahlfleck mit einem großen Strahldurchmesser auf dem Werkstück 9 führt. Der Schneidkopf 3 bzw. die Schneiddüse 13 wurden zu diesem Zweck zumindest mit einer vertikalen Bewegungskomponente vom Werkstück 9 weg verfahren, so dass im Vergleich zur Erzeugung des (Vor-)Lochs 28 ein größerer Arbeitsabstand A zwischen der Schneiddüse 13 und der ersten Werkstückoberfläche 17 vorliegt. Der Arbeitsabstand A zur Herstellung der Fasen- bzw. Senkungszone 21 ist beispielsweise mindestens 6-fach größer, insbesondere mindestens 10-fach größer, als der Arbeitsabstand A zur Erzeugung des (Vor-)Lochs 28 und beträgt vorzugsweise mindestens 30 mm, besonders bevorzugt mindestens 40 mm und insbesondere ca. 50 mm, wobei ein Bereich von 30 mm bis 50 mm bevorzugt ist. In entsprechender Weise sind der Strahlfleck und der Strahldurchmesser auf dem Werkstück 9 wesentlich größer. Beispielsweise ist die Querschnittfläche des Strahlflecks auf dem Werkstück 9 mindestens 6-fach größer, insbesondere mindestens 10-fach größer. Der Fokus des Laserstrahls 16 befindet sich weit oberhalb des Werkstücks 9. Die Fokuslage und der Strahldurchmesser des Laserstrahls 16 sind so gewählt, dass die Streckenenergie auf dem Werkstück 9 des Laserstrahls 16 relativ gering ist und der Laserstrahl 16 lediglich die Fasen- bzw. Senkungszone 21 erzeugt und das Werkstück 9 hierbei nicht penetriert wird (nicht-trennende Bearbeitung). Der Laserstrahl 16 ist in einem nicht-schneidenden Modus.

Beim Erzeugen der Fasen- bzw. Senkungszone 21 wird der nicht-schneidende Laserstrahl 16 in einer zur Ebene der Werkstückauflage 5 parallelen (horizontalen) Ebene bewegt, wobei der Laserstrahl 16 entlang mindestens einer Fasen- bzw. Senkungserzeugungslinie 44 bewegt wird. Die mindestens eine Fasen- bzw. Senkungserzeugungslinie 44 ist konzentrisch zur (Vorloch-)Schnittlinie 32 und erstreckt sich entlang der oberen (Vor-)Loch-Schnittkante 30, wobei die Fasen- bzw. Senkungserzeugungslinie 44 beispielsweise der oberen (Vor-)Loch-Schnittkante 30 entspricht oder vorzugsweise hierzu radial weiter nach außen versetzt ist. Dies bedeutet, dass die Fasen- bzw. Senkungserzeugungslinie 44 einen Durchmesser hat, der gleich oder vorzugsweise größer ist als der Durchmesser der oberen (Vor-)Loch-Schnittkante 30.

Für die Erzeugung der Fasen- bzw. Senkungszone 21 kann eine einzige Fasen- bzw. Senkungserzeugungslinie 44 vorgesehen sein, wobei der Laserstrahl 16 zur Erzeugung der Fasenzone 21 ein- oder mehrmals entlang der Fasen- bzw. Senkungserzeugungslinie 44 verfahren wird. Vorzugsweise wird der Laserstrahl 16 zur Erzeugung der Fasen- bzw. Senkungszone 21 mehrmals entlang der Fasen- bzw. Senkungserzeugungslinie 44 verfahren (typischerweise 2 bis 20 Überfahrten der Schneiddüse 13). Ein Versatz (d.h. radialer Abstand) der Fasen- bzw. Senkungserzeugungslinie 44 von der oberen (Vor-)Loch-Schnittkante 30 beträgt vorzugsweise mindestens 0,5 mm, besonders bevorzugt mindestens 1 mm und insbesondere 2 mm. Die Fasen- bzw. Senkungserzeugungslinie 44 musst so angeordnet werden, dass die erzeugte Fasen- bzw. Senkungszone 21 unmittelbar an das (Vor-)Loch 28 angrenzt, d.h. in das (Vor-)Loch 28 mündet.

Für die Erzeugung der Fasen- bzw. Senkungszone 21 können auch mehrere Fasen- bzw. Senkungserzeugungslinien 44 vorgesehen sein, wobei der Laserstrahl 16 zur Erzeugung der Fasen- bzw. Senkungszone 21 ein- oder mehrmals entlang einer jeden der Fasen- bzw. Senkungserzeugungslinien 44 verfahren wird. Vorzugsweise wird der Laserstrahl 16 zur Erzeugung der Fasen- bzw. Senkungszone 21 mehrmals entlang einer jeden der Fasen- bzw. Senkungserzeugungslinien 44 verfahren (typischerweise 2 bis 20 Überfahrten der Schneiddüse 13). Die mehreren Fasen- bzw. Senkungserzeugungslinien 44 sind zueinander konzentrisch angeordnet. Ein Versatz (d.h. radialer Abstand) der Fasen- bzw. Senkungserzeugungslinie 44 von der oberen (Vor-)Loch-Schnittkante 30 bzw. zwischen zwei unmittelbar benachbarten Fasen- bzw. Senkungserzeugungslinien 44 beträgt vorzugsweise von 0,25 mm bis 1 mm. Die Vergrößerung des Durchmessers von zwei unmittelbar benachbarten Fasen- bzw. Senkungserzeugungslinien44 beträgt somit vorzugsweise 0,5 mm bis 1mm. Die Fasen- bzw. Senkungserzeugungslinien 44 müssen so angeordnet werden, dass die erzeugte Fasen- bzw. Senkungszone 21 unmittelbar an das (Vor-)Loch 28 angrenzt, d.h. in das (Vor-)Loch 28 mündet.

In Figur 28B ist die kreisende Bewegung des Laserstrahls 16 entlang der mindestens einen Fasen- bzw. Senkungserzeugungslinie 44 um die Mittenachse 46 des (Vor-)Lochs 28 in schematischer Weise durch einen Pfeil veranschaulicht.

Denkbar wäre auch, dass der Laserstrahl 16 zur Erzeugung der Fasen- bzw. Senkungszone 21 entlang einer spiralig ausgebildeten Fasen- bzw. Senkungserzeugungslinie 44 verfahren wird. Vorzugsweise wird bei einem jeweiligen kompletten Umlauf eine Vergrößerung des Durchmessers der spiraligen Bahn von 0,25 mm bis 1 mm erzielt. Nach Erreichen des Zieldurchmessers ist es vorteilhaft, wenn dieser mehrmals überfahren wird. Auch in diesem Fall muss die Fasen- bzw. Senkungserzeugungslinie 44 so angeordnet sein, dass die erzeugte Fasen- bzw. Senkungszone 21 unmittelbar an das (Vor-)Loch 28 angrenzt, d.h. in das (Vor-)Loch 28 mündet.

Die Fasen- bzw. Senkungszone 21 ist eine Vertiefung des Werkstücks 9 an der ersten Werkstückoberfläche 17. Die Fasenzone 21 umgibt das (Vor-)Loch 28 konzentrisch, wobei sich die Fasen- bzw. Senkungszone 21, ausgehend von einem (radial-)äußeren Fasen- bzw. Senkungsrand 42, von der oberen Werkstückoberfläche 17 aus in das Werkstück 9 hinein bis zu einem (radial-)inneren Fasen- bzw. Senkungsrand 43 erstreckt, jedoch nicht bis zur unteren Werkstückoberfläche 20, d.h. die Fasen- bzw. Senkungszone 21 erstreckt sich nicht über die komplette Dicke des Werkstückteils. Der innere Fasen- bzw. Senkungsrand 42 befindet sich somit zwischen der oberen Werkstückoberfläche 17 und der unteren Werkstückoberfläche 20.

Der äußere Fasen- bzw. Senkungsrand 42 ist als jener Bereich des Werkstücks 9 definiert, an dem sich die Fasen- bzw. Senkungszone 21 zum Innern des Werkstücks 9 hin beginnt zu vertiefen. Der innere Fasen- bzw. Senkungsrand 42 ist als jener Bereich des Werkstücks 9 definiert, an dem die Fasen- bzw. Senkungszone 21 in den verbleibenden Teil des (Vor-)Lochs 28 übergeht, wobei der innere Fasen- bzw. Senkungsrand 42 von der (Vor-)Lochwandung 38 gebildet wird. Eine Flanke 45 der Fasen- bzw. Senkungszone 21 erstreckt vom äußeren Fasen- bzw. Senkungsrand 42 bis zum inneren Fasen- bzw. Senkungsrand 43.

In radialer Richtung kann die Fasen- bzw. Senkungszone 21 wahlfrei mit einer definierten Querschnittform versehen werden. Insbesondere können die Fokuslage und damit der Strahldurchmesser während der Erzeugung der Fasen- bzw. Senkungszone 21 variiert werden, um Tiefe und/oder Querschnittform der Fasen- bzw. Senkungszone 21 gezielt einzustellen. Bei einer Verringerung des Strahldurchmessers auf dem Werkstück 9 wird die Fasen- bzw. Senkungszone 21 tiefer, d.h. die Flanke 45 der Fasen- bzw. Senkungszone 21 wird steiler, wohingegen die Fasen- bzw. Senkungszone 21 flacher wird, d.h. die Flanke 45 der Fasen- bzw. Senkungszone 21 wird weniger steil, wenn der Strahldurchmesser auf dem Werkstück 9 vergrößert wird. In Figur 28B ist beispielhaft eine Fasen- bzw. Senkungszone 21 mit einer schrägen Flanke 45 mit einer Neigung von ca. 45° dargestellt, wobei auch größere oder kleinere Flankenneigungen möglich sind.

Die Fasen- bzw. Senkungszone 21 kann grundsätzlich in beliebiger Weise Anwendung finden, wobei sie in diesem Ausführungsbeispiel vorzugsweise dazu vorgesehen ist, den Kopf einer Senkkopfschraube aufzunehmen. Vorzugsweise weist die radial äußerste Fasen- bzw. Senkungserzeugungslinie 44 zur Erzeugung der Fasen- bzw. Senkungszone 21 einen Durchmesser auf, der etwas kleiner ist als der maximale Durchmesser des Kopfs der in der Fasen- bzw. Senkungszone 21 anzuordnenden Senkkopfschraube. Die Zahl der Fasen- bzw. Senkungserzeugungslinien 44 hängt vom Durchmesser des (Vor-)Lochs 28 bzw. dem Gewindedurchmesser der einzubringenden Schraube und der gewünschten Tiefe der Fasen- bzw. Senkungszone 21 ab. In aller Regel sind für (Vor-)Löcher 28 zur Aufnahme von Senkkopfschrauben mit einer metrischen Gewindegröße M3 - M6 (d.h. bei einem Durchmesser des (Vor-)Lochs 28 von 3 mm bis 6 mm) mindestens zwei Überfahrten der Schneiddüse 13 über eine selbe Fasen- bzw. Senkungserzeugungslinie 44 erforderlich, wobei eine typische Zahl von Überfahrten zwischen zwei und 25 liegt. Für Senkkopfschrauben mit einer metrischen Gewindegröße M8 - M12 beträgt die Zahl der Überfahrten in aller Regel mindestens 5, bevorzugt mindestens 10 und liegt typischerweise zwischen 10 und 25. Als Prozessgas wird bei der Erzeugung der Fasen- bzw. Senkungszone 21 beispielsweise Sauerstoff (O₂) eingesetzt, mit einem Gasdruck von beispielsweise weniger als 5 bar, der insbesondere von 2 bis 3,5 bar beträgt. Die Vorschubgeschwindigkeit der Schneiddüse 13 beim Erzeugen der Fasen- bzw. Senkungszone 21 beträgt vorzugsweise mindestens 4 m/min und die Laserleistung des Laserstrahls 16 beträgt vorzugsweise mindestens 1500 W.

Durch das (Vor-)Loch 28 kann die beim Erzeugen der Fasen- bzw. Senkungszone 21 entstehende Schmelze (Schlacke) in vorteilhafter Weise sehr gut nach unten abfließen und es kann somit verhindert werden, dass die Schmelze an die obere Werkstückoberfläche 17 des Werkstücks 9 gelangt und sich dort verfestigt und einen Grat bildet. Dieser beeinträchtigt nicht nur die spätere Verwendung der Fasen- bzw. Senkungszone 21 und kann eine aufwändige Nachbearbeitung der Fasen- bzw. Senkungszone 21 erfordern, sondern kann im schlimmsten Fall auch zu einer Kollision mit der Schneiddüse 13 führen. Durch das optionale Zerteilen des auszuschneidenden Butzens bei der Erzeugung des (Vor-)Lochs 28 kann stets sichergestellt werden, dass das (Vor-)Loch 28 frei ist und dass die Schmelze, welche bei der Erzeugung der Fasen- bzw. Senkungszone 21 anfällt, zuverlässig und sicher mittels des Prozessgases durch das (Vor-)Loch 28 ausgetrieben wird. Dies ist ein großer Vorteil der Erfindung.

Gleichwohl kann sich Schmelze an der (Vor-)Lochwandung 38, insbesondere auch im Bereich der unteren (Vor-)Loch-Schnittkante 31, absetzen und nach Abkühlung einen Grat 37 bilden, wie in Figur 28B veranschaulicht ist. Dieser Grat 37 wird aber in vorteilhafter Weise bei der optionalen Verbreiterung des (Vor-)Lochs 28 zur Erzeugung des Endlochs 29 (siehe Fig. 28C) mit entfernt, so dass ein Endloch 29 mit einer gratfreien Endlochwandung 39 erzeugt werden kann. Wenn ein solcher weiterer Schritt durchgeführt wird, stellt das bislang erzeugte Loch 28 ein "Vorloch" dar, das in seinem Durchmesser zum Endloch 29 verbreitert wird.

Im Weiteren wird die optionale Verbreiterung des Durchmessers des Lochs bzw. Vorlochs 28 zum Erzeugen des Endlochs 29 beschrieben:
Hierbei wird nach Erzeugen der Fasen- bzw. Senkungszone 21 das Vorloch 28 bzw. der nach Erzeugen der Fasen- bzw. Senkungszone 21 hiervon verbleibende Teil verbreitert, was im Weiteren anhand von Figur 28C veranschaulicht wird.

Für eine Vergrößerung des Durchmessers des Vorlochs 28 wird, analog zur Erzeugung des Vorlochs 28, der Laserstrahl 16 im schneidenden Modus verwendet. Hierbei hat die Schneiddüse 13 einen relativ geringen Arbeitsabstand A von der ersten Werkstückoberfläche 17, was zu einem engen Strahlfleck mit einem geringen Strahldurchmesser auf dem Werkstück 9 führt. Der Schneidkopf 3 bzw. die Schneiddüse 13 wurde zu diesem Zweck zumindest mit einer vertikalen Bewegungskomponente hin zum Werkstück 9 verfahren, so dass im Vergleich zur Erzeugung der Fasen- bzw. Senkungszone 21 ein kleinerer Arbeitsabstand A zwischen der Schneiddüse 13 und der ersten Werkstückoberfläche 17 vorliegt. Die Fokuslage und damit der Strahldurchmesser des Laserstrahls 16 sind so gewählt, dass die Streckenenergie auf dem Werkstück 9 des Laserstrahls 16 relativ groß ist und das Werkstück 9 hierbei penetriert wird (trennende Bearbeitung).

Beim Verbreitern des Vorlochs 28 wird der schneidende Laserstrahl 16 entlang einer kreisförmigen Endloch-Schnittlinie 37 geführt, wodurch ein kreisförmig-geschlossener Schnittspalt erzeugt wird. Die Endloch-Schnittlinie 37 ist konzentrisch zur Vorloch-Schnittlinie 32 und hierzu radial auswärts beabstandet angeordnet, d.h. weist einen größeren Durchmesser auf als die Vorloch-Schnittlinie 32. Die Endloch-Schnittlinie 37 befindet sich in radialer Richtung zwischen der Vorloch-Schnittline 32 und dem äußeren Fasen- bzw. Senkungszonenrand 42, mit der Maßgabe, dass ein radialer Bereich der Flanke 45 entfernt wird, jedoch nicht die komplette Flanke 45, d.h. die Fasen- bzw. Senkungszone 21 bleibt teilweise erhalten. Das Endloch 29 wird somit innerhalb der Fasen- bzw. Senkungszone 21 erzeugt. Bei der Verbreiterung des Vorlochs 28 wird eine im Querschnitt hohlzylindrische Scheibe aus dem Werkstück 9 vollständig ausgeschnitten. Diese fällt durch ihr Eigengewicht nach unten weg, so dass sie vom Werkstück 9 entfernt wird.

Durch Verbreiterung des Vorlochs 28 wird ein im Querschnitt rundes Endloch 29 im Werkstück 9 erzeugt, welches einen größeren Durchmesser aufweist als das Vorloch 28. Das Endloch 29 wird von einer vom Werkstück 9 gebildeten Endlochwandung 39 umgrenzt und erstreckt sich von einer oberen Endloch-Schnittkante 40, die zwischen der oberen Werkstückoberfläche 17 und der unteren Werkstückoberfläche 20 liegt, bis zu einer unteren Endloch-Schnittkante 41, welche von der unteren Werkstückoberfläche 20 gebildet wird. Der Durchmesser D des Endlochs 29 ist vorzugsweise zwischen 0,5 und 2 mm und insbesondere ca. 1 mm größer als der Durchmesser des zuvor erzeugten Vorlochs 28. Dies ermöglicht, dass an der Vorlochwandung 38 und an der unteren Werkstückoberfläche 20 im Bereich der unteren Vorloch-Schnittkante 31 anhaftender Grat 37 zuverlässig und sicher entfernt wird.

Vorzugsweise wird bei der Verbreiterung des Vorlochs 28 zur Erzeugung des Endlochs 29 ein gepulster Laserstrahl 16 eingesetzt. Dies ermöglicht in vorteilhafter Weise, dass sich das Werkstück 9 beim Erzeugen des Endlochs 29 weniger stark erwärmt, so dass das metallische Material des Werkstücks 9 an der Bearbeitungsstelle fester ist und sich eine gut definierte bzw. scharfe untere Endloch-Schnittkante 41 ergibt, welche das Abfließen der Schmelze beim Verbreitern des Vorlochs 28 erleichtert. Diese Maßnahme trägt dazu bei zu verhindern, dass sich Schmelze vor allem an der unteren Werkstückoberfläche 20 absetzt und dort einen Grat bildet.

Vorzugsweise wird ein gepulster Laserstrahl 16 mit einer mittleren Leistung von mindestens 200 W und einer Pulsspitzenleistung von mindestens 2000 W und einer Pulsfrequenz zwischen 10 Hz und 200 Hz eingesetzt. Je nach Werkstückmaterial und gewünschter Kantenqualität können Stickstoff (N), Druckluft oder Sauerstoff (O₂) als Prozessgas eingesetzt werden.

Wie in Figur 28C gezeigt, ist es vorteilhaft, wenn die Schneiddüse 13 für das Erzeugen des Endlochs 29 so weit nach unten verfahren wurde, dass sie in die Fasen- bzw. Senkungszone 21 eintaucht, d.h. die Düsenspitze 33 befindet sich unterhalb der oberen Werkstückoberfläche 17 bzw. unterhalb der Ebene, die durch die obere Werkstückoberfläche 17 definiert ist. Dies hat den besonderen Vorteil, dass sowohl der Laserstrahl 16 als auch das Prozessgas 25 an der Auftreffstelle am Werkstück 9 weniger stark aufgefächert sind, so dass genauer geschnitten werden kann und das Endloch 29 mit besonders hoher Präzision herstellbar ist. Zudem wird hierdurch entgegengewirkt, dass sich beim Erzeugen des Endlochs 29 entstehende Schmelze an der oberen Werkstückoberfläche 17 ablagert und dort einen Grat bildet. Hinzu kommt, dass die Schmelze durch den besonders stark fokussierten Prozessgasstrahl 25 besonders effizient durch das Vorloch 28 ausgetrieben werden kann, so dass auch einer Ablagerung von Schmelze an der oberen Werkstückoberfläche 17 entgegengewirkt wird. Dies sind große Vorteile, die durch diese Maßnahme erreicht werden können.

Vorteilhaft hat das (Vor-)Loch 28 sowie Endloch 29 einen Durchmesser, der gleich groß ist wie oder kleiner ist als eine Werkstückdicke des Werkstücks 9. Durch das erfindungsgemäße Verfahren können auch sehr kleine Löcher mit Fasen bzw. Senkungen hergestellt werden.

Es wird nun Bezug auf die Figuren 29A bis 29D genommen, worin eine weitere beispielhafte Ausgestaltung des erfindungsgemäßen Verfahrens zur Laserstrahlbearbeitung eines Werkstücks 9 durch die Strahlvorrichtung 1 von Figur 1 in schematischer Weise veranschaulicht ist. Die Verfahrensschritte der Figuren 28A, 28B und 28D entsprechen den Verfahrensschritten der Figuren 29A, 29B und 29C, wobei zur Vermeidung unnötiger Wiederholungen auf obige Ausführungen zu den Figuren 28A, 28B und 28C Bezug genommen wird. Die anhand der Figuren 29A bis 29D veranschaulichte Ausgestaltung des erfindungsgemäßen Verfahrens unterscheidet sich von der anhand der Figuren 28A bis 28C veranschaulichten Ausgestaltung nur im Verfahrensschritt von Figur 29C.

Demnach erfolgt zeitlich nach dem Erzeugen der Fasen- bzw. Senkungszone 21 (Figur 29B) und vor dem Verbreitern des Vorlochs 28 zum Erzeugen des Endlochs 29 (Figur 29D) eine aktive Kühlung der Fasen- bzw. Senkungszone 21 und des Vorlochs 28 (bzw. des verbleibenden Teils des Vorlochs 28) durch ein gasförmiges oder flüssiges Kühlmedium. Wie in Figur 29C veranschaulicht, wird zu diesem Zweck vorteilhaft das Prozessgas 25 eingesetzt, wobei der Laserstrahl 16 ausgeschaltet ist. Die Auftreffstelle am Werkstück 9 wird typischerweise mit einem Prozessgas mit einem (initialen) Gasdruck im Bereich von 2 bis 20 bar beaufschlagt. Das expandierende Prozessgas führt daher zu einer sehr effizienten Kühlung des metallischen Werkstücks 9, wobei die Effizienz der Kühlung umso besser ist, je heißer das zu kühlende Werkstück 9 ist. Durch die aktive Kühlung wird das metallische Material des Werkstücks 9 fester, so dass die untere Vorloch-Schnittkante 31 genau definiert ist, was das Abfließen der Schmelze durch das Vorloch 28 erleichtert. Auch diese Maßnahme trägt dazu bei, dass die Geometrie des Endlochs 29 sehr genau eingestellt werden kann. Zudem kann einem Anhaften von Grat an der unteren Werkstückoberfläche 20 entgegengewirkt werden.

Wie bereits ausgeführt, kann durch ein Verfahren, wie es anhand der Figuren 28A-28C und 29A-29D veranschaulicht ist, anstelle einer Fasen- bzw. Senkungszone, eine Verrundungszone an der werkstückteilseitigen Schnittkante erzeugt werden.

### Beispiel 1

### Herstellung von Fasen- bzw. Senkungszonen für Senkkopfschrauben mit metrischen Gewindegrößen

### M3 - M6 mittels Laserstrahl

Zunächst wird ein Vorloch ausgeschnitten mit einem Durchmesser, der ca. 1 mm kleiner ist als der mittlere Kernlochdurchmesser der Senkkopfschraube, so dass die Schmelze die im nächsten Schritt bei der Erzeugung der Fasen- bzw. Senkungszone anfällt, durch das Vorloch ausgetrieben werden kann.

Anschließend wird mit einem großen Abstand der Schneiddüse von der oberen Werkstückoberfläche (ca. 50 mm) und gezündetem Laserstrahl eine kreisförmige Fasen- bzw. Senkungserzeugungsbahn mit einem Durchmesser von 5 mm bis 15 mm überfahren, wobei als Prozessgas Sauerstoff (O₂) eingesetzt wird. Die Anzahl der Überfahrten hängt von der Tiefe der einzubringenden Fasen- bzw. Senkungszone ab, wobei in aller Regel zwei bis 25 Überfahrten durchgeführt werden. Hierdurch wird die Fasen- bzw. Senkungszone für den Kopf der Senkkopfschraube erzeugt. Alternativ wird eine spiralförmige Bahn überfahren.

Dann wird das Vorloch durch einen im Pulsbetrieb eingesetzten Laserstrahl auf Norm-Maß geschnitten, wobei der Durchmesser des Endlochs ca. 1 mm größer ist als der Durchmesser des Vorlochs. Hierdurch kann die Schlacke, welche im Vorloch und insbesondere an der unteren Werkzeugoberfläche im Bereich der unteren Vorloch-Schnittkante anhaftet, zuverlässig entfernt werden. Vorteilhafte Schneidparameter sind: gepulste mittlere Laserleistung (Pulsfrequenz 10 Hz): 400 W, Pulsspitzenleistung: 3000 W oder 6000 W, Vorschub: 0,1 m/min, Abstand zwischen Schneiddüse und oberer Werkstückoberfläche: 1,2 mm, Gasdruck des Prozessgases: 3,3 bar.

### Beispiel 2

### Herstellung von Fasen- bzw. Senkungszonen für Senkkopfschrauben mit metrischen Gewindegrößen M8 - M12 mittels Laserstrahl

Vor dem Schneiden des Vorloches wird ein Zerteilen des Butzens durchgeführt, indem Schnittspalte in Kreuzform mit überlagerter Spiralform in den auszuschneidenden Butzen eingebracht werden. Hierdurch wird sichergestellt, dass der Butzen des Vorlochs zuverlässig fällt und somit das Vorloch immer frei ist, so dass die Schmelze, welche bei der Fasen- bzw. Senkungszonenerzeugung anfällt, durch das Vorloch ausgetrieben werden kann. Dann wird das Vorloch geschnitten mit einem Durchmesser, der ca. 1 mm kleiner ist als der mittlere Kernlochdurchmesser der Senkkopfschraube.

Anschließend wird mit einem großen Abstand der Schneiddüse von der oberen Werkstückoberfläche (ca. 50 mm) und gezündetem Laserstrahl eine kreisförmige Fasen- bzw. Senkungszonenerzeugungsbahn mit einem Durchmesser von 10 mm bis 15 mm überfahren, wobei als Prozessgas Sauerstoff (O₂) eingesetzt wird. Die Anzahl der Überfahrten hängt von der Tiefe der einzubringenden Fasen- bzw. Senkungszone ab, wobei in aller Regel 10 bis 25 Überfahrten durchgeführt werden. Hierdurch wird die Fasen- bzw. Senkungszone für den Kopf der Senkkopfschraube erzeugt. Alternativ wird eine spiralförmige Bahn überfahren.

Dann wird das Vorloch durch einen im Pulsbetrieb eingesetzten Laserstrahl auf Norm-Maß geschnitten, wobei der Durchmesser des Endlochs ca. 1 mm größer ist als der Durchmesser des Vorlochs. Vorteilhafte Schneidparameter sind: gepulste mittlere Laserleistung (Pulsfrequenz 10 Hz): 400 W, Pulsspitzenleistung: 3000 W oder 6000 W, Vorschub: 0,1 m/min, Abstand zwischen Schneiddüse und oberer Werkstückoberfläche: 1,2 mm, Gasdruck des Prozessgases: 3,3 bar.

### Beispiel 3

### Herstellung einer Fasen- bzw. Senkungszone für Senkkopfschraube mit metrischer Gewindegröße M8 in 8 mm Baustahl mittels Laserstrahl

Vor dem Schneiden des Vorloches wird ein Zerteilen des Butzens durchgeführt, indem Schnittspalte in Kreuzform mit überlagerter Spiralform in den auszuschneidenden Butzen eingebracht werden. Als Prozessgas wird Sauerstoff (O₂), Stickstoff (N) oder Druckluft eingesetzt. Dann wird das Vorloch geschnitten, mit einem Durchmesser von 8 mm, der ca. 1 mm kleiner ist als der mittlere Kernlochdurchmesser der Senkkopfschraube.

Anschließend wird mit großem Abstand der Schneiddüse von der oberen Werkstückoberfläche (ca. 50 mm) und gezündetem Laserstrahl eine kreisförmige Fasen- bzw. Senkungszonenerzeugungsbahn mit einem Durchmesser von 12,6 mm überfahren, wobei als Prozessgas Sauerstoff (O₂) eingesetzt wird. Es erfolgen 17 Überfahrten, wobei eine Fasen- bzw. Senkungszone mit einem Durchmesser von 14 mm und einer Tiefe von 4,4 mm bis 4,5 mm im Blech erzeugt wird. Alternativ wird eine spiralförmige Bahn überfahren. Vorteilhafte Laserparameter sind: Laserleistung: 4000 W, Vorschub: 10 m/min, Abstand zwischen Schneiddüse und oberer Werkstückoberfläche (A): 50 mm, Gasdruck des Prozessgases: 3,3 bar, Fokusdurchmesser: 210 µm/150 µm.

Dann wird das Vorloch durch einen im Pulsbetrieb eingesetzten Laserstrahl auf Norm-Maß mit einem Durchmesser von 9 mm geschnitten, wobei Sauerstoff (O₂) als Prozessgas eingesetzt wird. Vorteilhafte Schneidparameter sind: gepulste mittlere Laserleistung (Pulsfrequenz 10 Hz): 400 W, Pulsspitzenleistung: 4000 W, Vorschub: 0,7 m/min, Abstand zwischen Schneiddüse und oberer Werkstückoberfläche (A): 0,7 mm, Gasdruck des Prozessgases: 17 bar, Fokusdurchmesser: 210 µm.

Durch die vorstehenden beschriebenen Ausgestaltungen des erfindungsgemäßen Verfahrens können Löcher, die jeweils eine Fasen- bzw. Senkungszone aufweisen, in einem Werkstück bzw. Werkstückteil in einfacher und kostengünstiger Weise mit hoher Präzision und Qualität effizient hergestellt werden. Ein Loch Fasen- bzw. Senkungszone kann in zwei Schritten hergestellt werden, wobei in einem ersten Schritt ein Loch im Werkstück erzeugt wird, gefolgt von einem zweiten Schritt, bei dem eine Fasen- bzw. Senkungszone um das Loch ausgebildet wird (umlaufende Fasen- bzw. Senkungszone). Optional kann ein dritter Schritt hinzugefügt werden, wobei die Herstellung eines Lochs mit Fasen- bzw. Senkungszone dann drei Schritte umfasst: in einem ersten Schritt wird ein Loch im Werkstück erzeugt, welches ein Vorloch darstellt, gefolgt von einem zweiten Schritt, bei dem eine Fasen- bzw. Senkungszone um das Vorloch ausgebildet wird (umlaufende Fasen- bzw. Senkungszone), gefolgt von einem dritten Schritt, bei das Vorloch in seinem Durchmesser verbreitert wird, so dass ein Endloch erzeugt wird.

In den Figuren 30A und B ist beispielhaft die Positionierung der Schneiddüse 13, welche den Laserstrahl 16 und das Prozessgas 25 gemeinsam führt, gezeigt. In Figur 30A hat die Schneiddüse 13 einen geringeren Abstand vom Werkstück 9, sodass der Bearbeitungsstrahl im trennenden Modus ist und der Schnittspalt 15 erzeugt werden kann. In Figur 30B hat die Schneiddüse 13 einen größeren Abstand vom Werkstück 9, sodass der Bearbeitungsstrahl im nicht-trennenden Modus ist und an einer der beiden Schnittkanten des Schnittspalts 15 eine Fasen- bzw. Senkungszone 21 (alternativ Verrundungszone) erzeugt werden kann.

In Figur 31 ist ein Flussdiagramm des erfindungsgemäßen Verfahrens gezeigt. Das Verfahren umfasst mindestens zwei sukzessive Schritte.

Hierbei wird in Schritt I (erster Bearbeitungsschritt) das Werkstück mit einem entlang einer Schnittlinie geführten ersten Bearbeitungsstrahl bearbeitet, wodurch am Werkstück ein die Dicke des Werkstücks durchgreifender Schnittspalt erzeugt wird, der sich in seiner Länge entlang der Schnittlinie erstreckt und in seiner Breite durch zwei Schnittkanten im Werkstück begrenzt wird.

Anschließend wird in einem Schritt II (zweiter Bearbeitungsschritt) das Werkstück mit einem zweiten Bearbeitungsstrahl bearbeitet, der entlang einer Nachbearbeitungslinie oder -zone, die parallel versetzt zu einer der beiden Schnittkanten verläuft, geführt wird, wodurch am Werkstück im Bereich dieser Schnittkante eine Verrundungszone oder Fasen- bzw. Senkungszone erzeugt wird

Wie sich aus vorstehender Beschreibung ergibt, stellt die Erfindung ein neuartiges Verfahren zur Bearbeitung eines Werkstücks zur Verfügung, bei dem Verrundungszone oder Fasen- bzw. Senkungszonen an der werkstückteilseitigen Schnittkante eines noch mit dem Restwerkstück verbundenen Werkstückteils oder an der werkstückteilseitigen Schnittkante, die durch Ausschneiden eines Abfallteils vom Werkstück gebildet wird, in einfacher, zuverlässiger und schneller Weise erzeugt werden können. Dies macht eine mechanische Nachbearbeitung des freigeschnittenen Werkstückteils verzichtbar, so dass die Herstellung von Werkstückteilen mit Verrundungs-, Fasen- oder Senkungszonen einfacher, schneller und kostengünstiger erfolgen kann. Eine Implementierung des erfindungsgemäßen Verfahrens in bereits bestehende Laserstrahlbearbeitungsvorrichtungen ist in einfacher Weise möglich, ohne hierfür aufwändige technische Maßnahmen vorsehen zu müssen. Vielmehr kann durch bloßen Eingriff in die Maschinensteuerung eine gewünschte Laserstrahlbearbeitung eines Werkstücks durch das erfindungsgemäße Verfahren realisiert werden.

### Bezugszeichenliste

- 1: Laserbearbeitungsvorrichtung
- 2: Laserschneideinrichtung
- 3: Schneidkopf
- 4: Arbeitstisch
- 5: Werkstückauflage
- 6: Querträger
- 7: Führungsschlitten
- 8: Laserstrahlquelle
- 9: Werkstück
- 10: Restwerkstück
- 11: Werkstückteil
- 12: Steuereinrichtung
- 13: Schneiddüse
- 14: Schnittlinie
- 14-1, 14-2, 14-3, 14-4, 14-5: Abschnitt der Schnittlinie
- 15: Schnittspalt
- 15-1, 15-2, 15-3, 15-4, 15-5: Abschnitt des Schnittspalts
- 16: Laserstrahl
- 17: oberseitige Werkstückoberfläche
- 18: Nachbearbeitungslinie
- 19, 19': Schnittkante
- 20: unterseitige Werkstückoberfläche
- 21: Fasen- bzw. Senkungszone
- 22: Nachbearbeitungszone
- 22-1, 22-2, 22-3, 22-4, 22-4': Abschnitt der Nachbearbeitungszone
- 23: Steg
- 24: Kreis
- 25: Prozessgas
- 26: Bearbeitungsstrahl
- 27: Strahlachse
- 28: (Vor-)Loch
- 29: Endloch
- 30: obere (Vor-)Loch-Schnittkante
- 31: untere (Vor-)Loch-Schnittkante
- 32: (Vorloch-)Schnittlinie
- 33: Düsenspitze
- 34: Verrundungszone
- 35: Werkstückoberseite
- 36: Werkstückunterseite
- 37: Grat
- 38: (Vor-)Lochwandung
- 39: Endlochwandung
- 40: obere Endloch-Schnittkante
- 41: untere Endloch-Schnittkante
- 42: äußerer Fasen- bzw. Senkungsrand
- 43: innerer Fasen- bzw. Senkungsrand
- 44: Fasen- bzw. Senkungserzeugungslinie
- 45: Flanke
- 46: Mittenachse

## Patentansprüche

1. Verfahren zur Bearbeitung eines platten- oder rohrförmigen Werkstücks (9) mit einem einen Laserstrahl (16) und ein Prozessgas (25) umfassenden Bearbeitungsstrahl (26), der zum Bearbeiten des Werkstücks (9) auf eine Werkstückoberfläche (17) gerichtet wird, wobei das Werkstück (9) in einem ersten Bearbeitungsschritt mit einem entlang einer Schnittlinie (14, 37) geführten ersten Bearbeitungsstrahl (26) bearbeitet wird, wodurch am Werkstück (9) ein die Dicke des Werkstücks durchgreifender Schnittspalt (15) erzeugt wird, der sich in seiner Länge entlang der Schnittlinie (14, 37) erstreckt und in seiner Breite durch zwei Schnittkanten (19, 19') im Werkstück (9) begrenzt wird, und wobei das Werkstück (9) in einem zweiten Bearbeitungsschritt mit einem zweiten Bearbeitungsstrahl (26) bearbeitet wird, der entlang einer Nachbearbeitungslinie (18, 44) oder -zone (22) geführt wird, die parallel versetzt zu einer der beiden Schnittkanten (19, 19') verläuft, wodurch am Werkstück (9) im Bereich dieser Schnittkante (19, 19') eine Fasenzone (21) erzeugt wird,
wobei das Werkstück (9) aus Stahl, insbesondere Baustahl oder Edelstahl, oder Aluminium besteht,
**dadurch gekennzeichnet, dass**
der Strahldurchmesser des ersten Bearbeitungsstrahls (26) auf der Werkstückoberfläche (17) weniger als 50% des Strahldurchmessers des zweiten Bearbeitungsstrahls (26) auf der Werkstückoberfläche (17) beträgt,
wobei der Bearbeitungsstrahl (26) vor dem Auftreffen auf die Werkstückoberfläche (17) durch eine Schneiddüse (13) geführt wird, wobei der Abstand der Schneiddüse (13) beim ersten Bearbeitungsschritt zur Werkstückoberfläche (17) maximal 5 mm und beim zweiten Bearbeitungsschritt mindestens 15 mm, insbesondere mindestens 30 mm, ist, wobei eine Laserleistung des Laserstrahls (16) im zweiten Bearbeitungsstrahl (26) geringer ist als im ersten Bearbeitungsstrahl (26),
wobei das Prozessgas (25) des zweiten Bearbeitungsstrahls (26) mit einem geringeren Gasdruck beaufschlagt wird als das Prozessgas (25) des ersten Bearbeitungsstrahls (26), und wobei
i) das Prozessgas des zweiten Bearbeitungsstrahls (26) als wesentlichen Bestandteil Sauerstoff enthält und mit einem Gasdruck im Bereich von 2 bar bis 4 bar beaufschlagt wird, oder
ii) das Prozessgas des zweiten Bearbeitungsstrahls (26) als wesentlichen Bestandteil Stickstoff enthält und mit Gasdruck im Bereich von 0,3 bar bis 1 bar beaufschlagt wird.

2. Verfahren nach Anspruch 1, **dadurch gekennzeichnet, dass** der Bearbeitungsstrahl (26) vor dem Auftreffen auf die Werkstückoberfläche (17) durch eine Schneiddüse (13) geführt wird, wobei
ein Fokus des Laserstrahls (16) des zweiten Bearbeitungsstrahls (26) innerhalb der Schneiddüse (13) liegt, insbesondere im Bereich von 3 bis 5 mm oberhalb einer Düsenöffnung (33), und
i) ein Fokus des Laserstrahls (16) des ersten Bearbeitungsstrahls (26) innerhalb der Schneiddüse liegt, insbesondere im Bereich von 1 bis 6 mm oberhalb einer Düsenöffnung (33), wobei das Prozessgas (25) des ersten Bearbeitungsstrahls (26) als wesentlichen Bestandteil Sauerstoff enthält, oder
ii) ein Fokus des Laserstrahls (16) des ersten Bearbeitungsstrahls (26) außerhalb der Schneiddüse liegt, insbesondere im Bereich von 0 bis 10 mm unterhalb einer Düsenöffnung (33), wobei das Prozessgas (25) des ersten Bearbeitungsstrahls (26) als wesentlichen Bestandteil Stickstoff enthält.

3. Verfahren nach einem der Ansprüche 1 bis 2, **dadurch gekennzeichnet, dass** der Bearbeitungsstrahl (26) vor dem Auftreffen auf die Werkstückoberfläche (17) durch eine Schneiddüse (13) geführt wird, wobei
ein Fokus des Laserstrahls (16) des zweiten Bearbeitungsstrahls (26) im Bereich von 30 bis 40 mm oberhalb der Werkstückoberfläche (17) liegt, und
i) ein Fokus des Laserstrahls (16) des ersten Bearbeitungsstrahls (26) im Bereich von 2 bis 7 mm oberhalb der Werkstückoberfläche (17) liegt, wobei das Prozessgas (25) des ersten Bearbeitungsstrahls (26) als wesentlichen Bestandteil Sauerstoff enthält, oder
ii) ein Fokus des Laserstrahls (16) des ersten Bearbeitungsstrahls (26) auf der Werkstückoberfläche (17) oder im Werkstück (9) liegt, insbesondere 0 bis 8 mm unterhalb der Werkstückoberfläche (17), wobei das Prozessgas (25) des ersten Bearbeitungsstrahls (26) als wesentlichen Bestandteil Stickstoff enthält.

4. Verfahren nach einem der Ansprüche 1 bis 3, **dadurch gekennzeichnet, dass** der erste Bearbeitungsstrahl (26) im ersten Bearbeitungsschritt und der zweite Bearbeitungsstrahl (26) im zweiten Bearbeitungsschritt stets senkrecht zur Werkstückoberfläche (17) ausgerichtet sind.

5. Verfahren nach einem der Ansprüche 1 bis 4, **dadurch gekennzeichnet, dass** das Werkstück (9) eine Dicke im Bereich von 3 mm bis 60 mm aufweist.

6. Verfahren nach einem der Ansprüche 1 bis 5, **dadurch gekennzeichnet, dass** der erste Bearbeitungsstrahl (26) ein anderes Prozessgas umfasst als der zweite Bearbeitungsstrahl (26).

7. Verfahren nach einem der Ansprüche 1 bis 6, **dadurch gekennzeichnet, dass** das Prozessgas (25) des ersten Bearbeitungsstrahls (26) als wesentlichen Bestandteil Stickstoff oder Sauerstoff oder ein Mischgas aus Stickstoff und Sauerstoff umfasst, und das Prozessgas (25) des zweiten Bearbeitungsstrahls (26) als wesentlichen Bestandteil Stickstoff oder Sauerstoff oder ein Mischgas aus Stickstoff und Sauerstoff umfasst.

8. Verfahren nach einem der Ansprüche 1 bis 7, **dadurch gekennzeichnet, dass**
i) für ein Werkstück (9) aus Baustahl, das Prozessgas (25) des zweiten Bearbeitungsstrahls (26) als wesentlichen Bestandteil Sauerstoff aufweist, oder
ii) für ein Werkstück (9) aus Edelstahl oder Aluminium das Prozessgas (25) des zweiten Bearbeitungsstrahls (26) als wesentlichen Bestandteil Stickstoff enthält.

9. Verfahren nach einem der Ansprüche 1 bis 8, **dadurch gekennzeichnet, dass** ein Gasdruck des Prozessgases (25) im zweiten Bearbeitungsstrahl (26) gegenüber einem Gasdruck des Prozessgases (25) im ersten Bearbeitungsstrahl (26), insbesondere in Abhängigkeit einer Materialdicke des Werkstücks (9) und/oder einer Dimensionierung der Fasenzone, verändert wird.

10. Verfahren nach einem der Ansprüche 1 bis 9, **dadurch gekennzeichnet, dass** eine Laserleistung des Laserstrahls (16) im zweiten Bearbeitungsstrahl (26) gegenüber einer Laserleistung des Laserstrahls (16) im ersten Bearbeitungsstrahl (26), insbesondere in Abhängigkeit einer Materialdicke des Werkstücks (9) und/oder einer Dimensionierung der Fasenzone, verändert wird.

11. Verfahren nach einem der Ansprüche 1 bis 10, **dadurch gekennzeichnet, dass** die Laserleistung des Laserstrahls (16) im zweiten Bearbeitungsstrahl (26) maximal 4 kW beträgt.

12. Verfahren nach einem der Ansprüche 1 bis 11, **dadurch gekennzeichnet, dass** die Laserleistung des Laserstrahls (16) im ersten Bearbeitungsstrahl (26) im Bereich von 1 kW bis 40 kW und im zweiten Bearbeitungsstrahl (26) im Bereich von 0,5 kW bis 4 kW liegt.

13. Verfahren nach einem der Ansprüche 1 bis 12, **dadurch gekennzeichnet, dass** die Schneiddüse (13) einen Düsendurchmesser aufweist, wobei für den ersten und den zweiten Bearbeitungsstrahl (26) derselbe Düsendurchmesser, insbesondere dieselbe Schneiddüse (13) verwendet wird.

14. Verfahren nach einem der Ansprüche 1 bis 13, **dadurch gekennzeichnet, dass** zur Erzeugung des Schnittspalts (15) der erste Bearbeitungsstrahl (26) nur einmal entlang der Schnittlinie (14, 37) geführt wird und dass zur Erzeugung der Fasenzone (21) der zweite Bearbeitungsstrahl (26) mehrmals entlang der Nachbearbeitungslinie (18, 44) oder -zone (22) geführt wird.

15. Verfahren nach Anspruch 14, **dadurch gekennzeichnet, dass** die Laserleistung des Laserstrahls (16) im zweiten Bearbeitungsstrahl (26) beim letzten Führen entlang der Nachbearbeitungslinie (18, 44) oder -zone (22) geringer ist als bei mindestens einem vorherigen Führen entlang der Nachbearbeitungslinie (18, 44) oder -zone (22), und insbesondere um die halbe Laserleitung verringert ist.

16. Verfahren nach einem der Ansprüche 1 bis 15, **dadurch gekennzeichnet, dass** der Energieeintrag in das Werkstück (9) pro Fläche und Zeit beim ersten Bearbeitungsschritt größer ist als beim zweiten Bearbeitungsschritt.

17. Verfahren nach einem der Ansprüche 1 bis 16, **dadurch gekennzeichnet, dass** die Phasenzone (21) unmittelbar an die Schnittkante (19, 19') anschließt oder in diese übergeht.

18. Verfahren nach einem der Ansprüche 1 bis 17, **dadurch gekennzeichnet, dass** mittels des ersten Bearbeitungsschritts aus dem Werkstück (9) ein Werkstückteil (11) ausgeschnitten wird, unter Ausbildung des Werkstückteils (11) und eines Restgitters (10), wobei die Außenkontur des Werkstückteils (11) durch die Schnittline (14) festgelegt ist, wobei die eine der beiden Schnittkanten (19, 19') eine werkstückteilseitige Schnittkante (19) ist und die andere der beiden Schnittkanten (19, 19') eine restgitterseitige Schnittkante (19') und wobei die werkstückteilseitige Schnittkante (19) mittels des zweiten Bearbeitungsschritts bearbeitet wird.

19. Verfahren nach Anspruch 18, **dadurch gekennzeichnet, dass** zur Ausbildung des Schnittspalts (15) der erste Bearbeitungsstrahl (26) beim Führen entlang der Werkstückoberfläche (17) zumindest einmal, insbesondere mehrmals abgeschaltet und dann wieder angeschaltet wird, wodurch der Schnittspalt (15) mehrere Schnittspaltabschnitte (15-1, 15-2, 15-3, 15-4, 15-5) ausbildet, so dass jeweils zwischen zwei benachbarten Schnittspaltabschnitten (15-1, 15-2, 15-3, 15-4, 15-5) ein Steg (23) angeordnet ist, durch den das Werkstückteil (11) und das Restgitter (10) miteinander verbunden bleiben.

20. Verfahren nach einem der Ansprüche 1 bis 19, **dadurch gekennzeichnet, dass** mittels des ersten Bearbeitungsschritts aus dem Werkstück (9) eine lochförmige Ausnehmung (28, 29) aus dem Werkstück ausgeschnitten wird, unter Ausbildung eines Abfallstücks und eines Werkstückteils, wobei die Außenkontur des Abfallstücks und die Innenkontur der lochförmigen Ausnehmung im Werkstückteil durch die Schnittline (37, vorgegeben ist, wobei die eine der beiden Schnittkanten eine werkstückteilseitige Schnittkante und die andere der beiden Schnittkanten eine abfallstückseitige Schnittkante ist und wobei die werkstückteilseitige Schnittkante mittels des zweiten Bearbeitungsschritts bearbeitet wird.

21. Verfahren nach Anspruch 20, **dadurch gekennzeichnet, dass** die lochförmige Ausnehmung (28, 29) einen Durchmesser aufweist, der gleich groß wie oder kleiner als eine Werkstückdicke des Werkstücks (9) ist.

## Claims

1. A method for machining a plate-shaped or tubular workpiece (9) with a machining beam (26) comprising a laser beam (16) and a process gas (25), the machining beam being directed onto a workpiece surface (17) for the purposes of machining the workpiece (9), wherein the workpiece (9) is machined in a first machining step with a first machining beam (26) that is guided along a cutting line (14, 37), whereby a cutting gap (15) reaching through the thickness of the workpiece is produced on the workpiece (9), the length of said gap extending along the cutting line (14, 37) and the width thereof being limited by two cutting edges (19, 19') in the workpiece (9), and wherein in a second machining step the workpiece (9) is machined with a second machining beam (26) that is guided along a follow-on machining line (18, 44) or follow-on machining zone (22) that runs parallel and offset relative to one of the two cutting edges (19, 19'), whereby a chamfered zone (21) is produced on the workpiece (9) in the region of said cutting edge (19, 19'),
wherein the workpiece (9) consists of steel, in particular carbon steel or stainless steel, or aluminum,
**characterized in that**
the beam diameter of the first machining beam (26) on the workpiece surface (17) is less than 50% of the beam diameter of the second machining beam (26) on the workpiece surface (17),
wherein the machining beam (26) is guided through a cutting nozzle (13) prior to its impinging on the workpiece surface (17), wherein the distance of the cutting nozzle (13) to the workpiece surface (17) is maximum 5 mm during the first machining step, and in the second machining step it is at least 15 mm, in particular at least 30 mm,
wherein a laser power of the laser beam (16) is lower in the second machining beam (26) than in the first machining beam (26),
wherein the process gas (25) of the second machining beam (26) is subjected to a lower gas pressure than the process gas (25) of the first machining beam (26), and wherein
i) the process gas of the second machining beam (26) contains oxygen as a substantial component and is subjected to a gas pressure in the range of 2 bar to 4 bar, or
i) the process gas of the second machining beam (26) contains nitrogen as a substantial component and is subjected to a gas pressure in the range of 0.3 bar to 1 bar.

2. The method according to claim 1, **characterized in that** the machining beam (26) is guided through a cutting nozzle (13) prior to its impinging on the workpiece surface (17), wherein
a focus of the laser beam (16) of the second machining beam (26) lies inside the cutting nozzle (13), in particular in the range of 3 to 5 mm above a nozzle opening (33), and
i) a focus of the laser beam (16) of the second machining beam (26) lies inside the cutting nozzle, in particular in the range of 1 to 6 mm above a nozzle opening (33), wherein the process gas (25) of the first machining beam (26) contains oxygen as a substantial component, or
ii) a focus of the laser beam (16) of the first machining beam (26) lies outside the cutting nozzle, in particular in the range of 0 to 10 mm below a nozzle opening (33), wherein the process gas (25) of the first machining beam (26) contains nitrogen as a substantial component.

3. The method according to any one of claims 1 to 2, **characterized in that** the machining beam (26) is guided through a cutting nozzle (13) prior to its impinging on the workpiece surface (17), wherein
a focus of the laser beam (16) is the second machining beam (26) lies in the range of 30 to 40 mm above the workpiece surface (17), and
i) a focus of the laser beam (16) of the first machining beam (26) lies in the range of 2 to 7 mm above the workpiece surface (17), wherein the process gas (25) of the first machining beam (26) contains oxygen as a substantial component, or
ii) a focus of the laser beam (16) of the first machining beam (26) lies on the workpiece surface (17) or in the workpiece (9), in particular 0 to 8 mm below the workpiece surface (17), wherein the process gas (25) of the first machining beam (26) contains nitrogen as a substantial component.

4. The method according to any one of claims 1 to 3, **characterized in that** the first machining beam (26) in the first machining step and the second machining beam (26) in the second machining step are always aligned perpendicular to the workpiece surface (17).

5. The method according to any one of claims 1 to 4, **characterized in that** the workpiece (9) has a thickness in the range of 3 mm to 60 mm.

6. The method according to any one of claims 1 to 5, **characterized in that** the first machining beam (26) comprises a different process gas than the second machining beam (26).

7. The method according to any one of claims 1 to 6, **characterized in that** the process gas (25) of the first machining beam (26) comprises nitrogen or oxygen as a substantial component, or a mixed gas consisting of nitrogen and oxygen, and the process gas (25) of the second machining beam (26) comprises nitrogen or oxygen as a substantial component, or a mixed gas consisting of nitrogen and oxygen.

8. The method according to any one of claims 1 to 7, **characterized in that**
i) for a workpiece (9) made of carbon steel, the process gas (25) of the second machining beam (26) has oxygen as substantial component, or
i) for a workpiece (9) made of stainless steel, the process gas (25) of the second machining beam (26) has nitrogen as substantial component.

9. The method according to any one of claims 1 to 8, **characterized in that** a gas pressure of the process gas (25) in the second machining beam (26) is changed relative to a gas pressure of the process gas (25) in the first machining beam (26), in particular as a function of a material thickness of the workpiece (9) and/or of a dimensioning of the chamfered zone.

10. The method according to any one of claims 1 to 9, **characterized in that** a laser power of the laser beam (16) in the second machining beam (26) is changed relative to a laser power of the laser beam (16) in the first machining beam (26), in particular as a function of a material thickness of the workpiece (9) and/or of a dimensioning of the chamfered zone.

11. The method according to any one of claims 1 to 10, **characterized in that** the laser power of the laser beam (16) in the second machining beam (26) is a maximum of 4 kW.

12. The method according to any one of claims 1 to 11, **characterized in that** the laser power of the laser beam (16) in the first machining beam (26) is in the range of 1 kW to 40 kW and in the second machining beam (26) is in the range of 0.5 kW to 4 kW.

13. The method according to any one of claims 1 to 12, **characterized in that** the cutting nozzle (13) has a nozzle diameter, wherein the same nozzle diameter is used for the first and the second machining beam (26), in particular the same cutting nozzle (13) is used.

14. The method according to any one of claims 1 to 13 **characterized in that** to produce the cutting gap (15) the first machining beam (26) is guided only once along the cutting line (14, 37) and that to produce the chamfered zone (21) the second machining beam (26) is guided multiple times along the follow-on machining line (18, 44) or follow-on machining zone (22).

15. The method according to claim 14, **characterized in that** the laser power of the laser beam (16) in the second machining beam (26) in the last guiding along the follow-on machining line (18, 44) or follow-on machining zone (22) is lower than for at least one prior guiding along the follow-on machining line (18, 44) or follow-on machining zone (22), and is reduced in particular by half the laser power.

16. The method according to any one of claims 1 to 15, **characterized in that** the energy input into the workpiece (9) per surface area and time in the first machining step is greater than in the second machining step.

17. The method according to any one of claims 1 to 16, **characterized in that** the phase zone (21) directly abuts the cutting edge (19, 19') or transitions into it.

18. The method according to any one of claims 1 to 17, **characterized in that** a workpiece part (11) is cut out of the workpiece (9) by means of the first machining step, forming the workpiece part (11) and a residual grid (10), wherein the outer contour of the workpiece part (11) is fixed by the cutting line (14), wherein the one of the two cutting edges (19, 19') is a workpiece part-side cutting edge (19) and the other of the two cutting edges (19, 19') is a residual grid-side cutting edge (19'), and wherein the workpiece part-side cutting edge (19) is machined by means of the second machining step.

19. The method according to claim 18, **characterized in that** to form the cutting gap (15), the first machining beam (26) is turned off at least once, in particular multiple times, and then turned back on again during the guiding along the workpiece surface (17), whereby the cutting gap (15) forms a plurality of cutting gap sections (15-1, 15-2, 15-3, 15-4, 15-5) such that a web (23) is arranged between two adjacent cutting gap sections (15-1, 15-2, 15-3, 15-4, 15-5), respectively, by way of which the workpiece part (11) and the residual grid (10) remains connected to one another.

20. The method according to any one of claims 1 to 19, **characterized in that** by means of the first machining step, a hole-shaped recess (28, 29) is cut out of the workpiece (9), forming a dropout piece and a workpiece part, wherein the outer contour of the dropout piece and the inner contour of the hole-shaped recess is specified in the workpiece part by the cutting line (37), wherein the one of the two cutting edges is a workpiece part-side cutting edge and the other of the two cutting edges is a dropout piece-side cutting edge, and wherein the workpiece part-side cutting edge is machined by means of the second machining step.

21. The method according to claim 20, **characterized in that** the hole-shaped recess (28, 29) has a diameter that is the same size as or is smaller than a workpiece thickness of the workpiece (9).

## Revendications

1. Procédé d'usinage d'une pièce (9) de forme plane ou tubulaire, utilisant un faisceau d'usinage (26) comportant un faisceau laser (16) et un gaz de procédé (25), dirigé sur une surface de la pièce (17) pour usiner la pièce (9), dans lequel, lors d'une première étape d'usinage, la pièce (9) est usinée à l'aide d'un premier faisceau d'usinage (26) guidé le long d'une ligne de coupe (14, 37), créant ainsi sur la pièce (9) un trait de coupe (15) à travers l'épaisseur de la pièce, qui s'étend en longueur selon la ligne de coupe (14, 37) et est limité en largeur par deux bords de coupe (19, 19') sur la pièce (9), et dans lequel, lors d'une deuxième étape d'usinage, la pièce (9) est usinée à l'aide d'un deuxième faisceau d'usinage (26) guidé le long d'une ligne de post-usinage (18, 44) ou zone de post-usinage (22), qui est parallèle et décalée par rapport à l'un des deux bords de coupe (19, 19'), moyennant quoi une zone de chanfrein (21) adjacente audit bord de coupe (19, 19') est créée sur la pièce (9),
dans lequel la pièce (9) est en acier, en particulier en acier de construction ou en acier inoxydable, ou en aluminium,
**caractérisé en ce que**
le diamètre de faisceau du premier faisceau d'usinage (26) sur la surface de la pièce (17) est inférieur à 50 % du diamètre de faisceau du deuxième faisceau d'usinage (26) sur la surface de la pièce (17),
dans lequel le faisceau d'usinage (26) est guidé à travers une buse de coupe (13) avant de frapper la surface de la pièce (17), dans lequel, lors de la première étape d'usinage, la distance entre la buse de coupe (13) et la surface de la pièce (17) est d'au plus 5 mm et, lors de la deuxième étape d'usinage, d'au moins 15 mm, en particulier d'au moins 30 mm,
dans lequel la puissance du faisceau laser (16) du deuxième faisceau d'usinage (26) est inférieure à celle du premier faisceau d'usinage (26),
dans lequel le gaz de procédé (25) du deuxième faisceau d'usinage (26) présente une pression de gaz inférieure à celle du gaz de procédé (25) du premier faisceau d'usinage (26), et dans lequel
i) le gaz de procédé du deuxième faisceau d'usinage (26) contient de l'oxygène comme composant essentiel et présente une pression de gaz comprise dans une plage de 2 bars à 4 bars, ou
ii) le gaz de procédé du deuxième faisceau d'usinage (26) contient de l'azote comme composant essentiel et présente une pression de gaz comprise dans une plage de 0,3 bar à 1 bar.

2. Procédé selon la revendication 1, **caractérisé en ce que** le faisceau d'usinage (26) est guidé à travers une buse de coupe (13) avant de frapper la surface de la pièce (17), dans lequel
le foyer du faisceau laser (16) du deuxième faisceau d'usinage (26) se situe à l'intérieur de la buse de coupe (13), en particulier dans une plage de 3 mm à 5 mm au-dessus de l'ouverture de buse (33), et
i) le foyer du faisceau laser (16) du premier faisceau d'usinage (26) est situé à l'intérieur de la buse de coupe, en particulier dans une plage de 1 mm à 6 mm au-dessus de l'ouverture de buse (33), dans lequel le gaz de procédé (25) du premier faisceau d'usinage (26) contient de l'oxygène comme composant essentiel, ou
ii) le foyer du faisceau laser (16) du premier faisceau d'usinage (26) est situé à l'extérieur de la buse de coupe, en particulier dans une plage de 0 mm à 10 mm en dessous de l'ouverture de buse (33), dans lequel le gaz de procédé (25) du premier faisceau d'usinage (26) contient de l'azote comme composant essentiel.

3. Procédé selon l'une des revendications 1 et 2, **caractérisé en ce que** le faisceau d'usinage (26) est guidé à travers une buse de coupe (13) avant de frapper la surface de la pièce (17), dans lequel
le foyer du faisceau laser (16) du deuxième faisceau d'usinage (26) est situé dans une plage de 30 mm à 40 mm au-dessus de la surface de la pièce (17), et
i) le foyer du faisceau laser (16) du premier faisceau d'usinage (26) est situé dans une plage de 2 mm à 7 mm au-dessus de la surface de la pièce (17), dans lequel le gaz de procédé (25) du premier faisceau d'usinage (26) contient de l'oxygène comme composant essentiel, ou
ii) le foyer du faisceau laser (16) du premier faisceau d'usinage (26) est situé sur la surface de la pièce (17) ou dans la pièce (9), en particulier entre 0 mm et 8 mm en dessous de la surface de la pièce (17), dans lequel le gaz de procédé (25) du premier faisceau d'usinage (26) contient de l'azote comme composant essentiel.

4. Procédé selon l'une des revendications 1 à 3, **caractérisé en ce que** le premier faisceau d'usinage (26) lors de la première étape d'usinage et le deuxième faisceau d'usinage (26) lors de la deuxième étape d'usinage sont toujours alignés perpendiculairement à la surface de la pièce (17).

5. Procédé selon l'une des revendications 1 à 4, **caractérisé en ce que** la pièce (9) présente une épaisseur comprise dans une plage de 3 mm à 60 mm.

6. Procédé selon l'une des revendications 1 à 5, **caractérisé en ce que** le premier faisceau d'usinage (26) comprend un autre gaz de procédé que le deuxième faisceau d'usinage (26).

7. Procédé selon l'une des revendications 1 à 6, **caractérisé en ce que** le gaz de procédé (25) du premier faisceau d'usinage (26) comprend de l'azote, de l'oxygène ou un mélange gazeux d'azote et d'oxygène comme composant essentiel, et **en ce que** le gaz de procédé (25) du deuxième faisceau d'usinage (26) comprend de l'azote, de l'oxygène ou un mélange gazeux d'azote et d'oxygène comme composant essentiel.

8. Procédé selon l'une des revendications 1 à 7, **caractérisé en ce que**
i) pour une pièce (9) en acier de construction, le gaz de procédé (25) du deuxième faisceau d'usinage (26) contient de l'oxygène comme composant essentiel, ou
ii) pour une pièce (9) en acier inoxydable ou en aluminium, le gaz de procédé (25) du deuxième faisceau d'usinage (26) contient de l'azote comme composant essentiel.

9. Procédé selon l'une des revendications 1 à 8, **caractérisé en ce que** la pression du gaz de procédé (25) dans le deuxième faisceau d'usinage (26) est modifiée par rapport à la pression du gaz de procédé (25) dans le premier faisceau d'usinage (26), en particulier en fonction de l'épaisseur du matériau de la pièce (9) et/ou des dimensions de la zone de chanfrein.

10. Procédé selon l'une des revendications 1 à 9, **caractérisé en ce que** la puissance du faisceau laser (16) dans le deuxième faisceau d'usinage (26) est modifiée par rapport à la puissance du faisceau laser (16) dans le premier faisceau d'usinage (26), en particulier en fonction de l'épaisseur du matériau de la pièce (9) et/ou des dimensions de la zone de chanfrein.

11. Procédé selon l'une des revendications 1 à 10, **caractérisé en ce que** la puissance du faisceau laser (16) dans le deuxième faisceau d'usinage (26) est d'au maximum de 4 kW.

12. Procédé selon l'une des revendications 1 à 11, **caractérisé en ce que** la puissance du faisceau laser (16) dans le premier faisceau d'usinage (26) est comprise dans une plage de 1 kW à 40 kW et dans le deuxième faisceau d'usinage (26) dans une plage de 0,5 kW à 4 kW.

13. Procédé selon l'une des revendications 1 à 12, **caractérisé en ce que** la buse de coupe (13) présente un diamètre de buse, dans lequel, pour les premier et deuxième faisceaux d'usinage (26), le même diamètre de buse est utilisé, et en particulier la même buse de coupe (13) est utilisée.

14. Procédé selon l'une des revendications 1 à 13, **caractérisé en ce que,** pour générer le trait de coupe (15), le premier faisceau d'usinage (26) est guidé une seule fois le long de la ligne de coupe (14, 37) et, pour générer la zone de chanfrein (21), le deuxième faisceau d'usinage (26) est guidé plusieurs fois le long de la ligne de post-usinage (18, 44) ou zone de post-usinage (22).

15. Procédé selon la revendication 14, **caractérisé en ce que** la puissance du faisceau laser (16) dans le deuxième faisceau d'usinage (26) pendant le dernier guidage le long de la ligne de post-usinage (18, 44) ou zone de post-usinage (22) est inférieure à la puissance lors d'au moins un guidage précédent le long de la ligne de post-usinage (18, 44) ou zone de post-usinage (22), et en particulier **en ce que** ladite puissance est réduite de moitié.

16. Procédé selon l'une des revendications 1 à 15, **caractérisé en ce que** l'apport d'énergie à la pièce (9) par unité de surface et par unité de temps est plus importante lors de la première étape d'usinage que lors de la deuxième étape d'usinage.

17. Procédé selon l'une des revendications 1 à 16, **caractérisé en ce que** la zone de phase (21) est immédiatement adjacente au bord de coupe (19, 19') ou affleure avec celui-ci.

18. Procédé selon l'une des revendications 1 à 17, **caractérisé en ce que,** lors de la première étape d'usinage, une partie de pièce (11) est découpée dans la pièce (9) pour former la partie de pièce (11) et une grille résiduelle (10), dans lequel le contour externe de la partie de pièce (11) est défini par la ligne de coupe (14), dans lequel l'un des deux bords de coupe (19, 19') est un bord de coupe (19) côté partie de pièce et l'autre bord desdits deux bords de coupe (19, 19') est un bord de coupe (19') côté grille résiduelle, et dans lequel le bord de coupe (19) côté partie de pièce est usiné lors de la deuxième étape d'usinage.

19. Procédé selon la revendication 18, **caractérisé en ce que,** pour former le trait de coupe (15), le premier faisceau d'usinage (26) est désactivé au moins une fois, en particulier plusieurs fois, puis réactivé lors du guidage le long de la surface de la pièce (17), moyennant quoi le trait de coupe (15) forme plusieurs sections de trait de coupe (15-1, 15-2, 15-3, 15-4, 15-5), de sorte que des traverses (23) sont chaque fois formées entre deux sections de trait de coupe (15-1, 15-2, 15-3, 15-4, 15-5) adjacentes, via lesquelles la partie de pièce (11) et la grille résiduelle (10) restent connectées entre elles.

20. Procédé selon l'une des revendications 1 à 19, **caractérisé en ce que,** lors de la première étape d'usinage, un évidement en forme de trou (28, 29) est découpé dans la pièce (9), formant une pièce de rebut et une partie de pièce, dans lequel le contour externe de la pièce de rebut et le contour interne de l'évidement en forme de trou dans la partie de pièce sont définis par la ligne de coupe (37), dans lequel ledit un des deux bords de coupe est un bord de coupe côté partie de pièce et l'autre des deux bords de coupe est un bord de coupe côté pièce de rebut, et dans lequel le bord de coupe côté partie de pièce est usiné lors de la deuxième étape d'usinage.

21. Procédé selon la revendication 20, **caractérisé en ce que** l'évidement en forme de trou (28, 29) présente un diamètre inférieur ou égal à l'épaisseur de la pièce (9).
